# EUROPEAN PATENT APPLICATION

(11) **EP 2 337 262 A1**
(43) Date of publication of application: **22.06.2011**
(21) Application number: 09818982.2
(22) Date of filing: 07.10.2009
(51) Int. Cl.: H04L 9/08, G06F 12/00, G09C 1/00, H04L 9/14

(54) **INFORMATION PROCESSING DEVICE, METHOD, PROGRAM, AND INTEGRATED CIRCUIT**

(30) Priority: 10.10.2008 JP 2008263680
(71) Applicant: Panasonic Corporation, Kadoma-shi Osaka 571-8501 (JP)
(72) Inventor: ITO, Takayuki, Osaka-shi, Osaka 540-6207 (JP); MATSUSHIMA, Hideki, Osaka-shi, Osaka 540-6207 (JP); TAKAYAMA, Hisashi, Osaka-shi, Osaka 540-6207 (JP); HAGA, Tomoyuki, Osaka-shi, Osaka 540-6207 (JP)
(74) Representative: Grünecker, Kinkeldey, Stockmair & Schwanhäusser Anwaltssozietät
(86) International application number: PCT/JP2009/005217
(87) International publication number: WO 2010/041442

(57) **Abstract**

The aim is to provide high-speed data synchronization. To achieve the aim, in data synchronization using a plurality of key databases with respect to same data pieces, a key for one key database, which has been determined in advance, is used for updating the data piece managed under the other key database. This reduces the number of key decryption operations. A key management software 116, which manages a key database A120 and a key database B121 each having a tree structure, determines whether to perform data synchronization when requested by an upper-level application to perform data encryption, and performs synchronization of encrypted data by using a key of the other database which has been determined in advance. This reduces the number of times the encrypted key is loaded onto a cryptographic processing unit 114, and realizes high-speed cryptographic processing on data.

## Description

### [Technical Field]

The present invention relates to technologies for sharing data among a plurality of cryptographic systems.

### [Background Art]

In recent years, theft of data (e.g. personal information) stored in information processing apparatuses such as personal computers (PCs) and mobile phones has become a widespread problem.

Such data theft is sometimes committed with a malicious program, such as a computer virus. A malicious program invades into an information processing apparatus by exploiting the vulnerability of other programs that are running in the apparatus, and performs improper operations to read data stored in the storage unit of the apparatus and to send the data to the attacker or the like.

To prevent such data theft, data may be protected by data encryption. Data encryption technologies include technologies that use a file system to perform encryption, and technologies that are not dependent on any file system.

Patent Literature 1 discloses a technology for encrypting a file by using a file key corresponding to the file. With this technology, each file can be encrypted with a different key.

Non-Patent Literature I discloses the specifications of Protected Storage defined by the Trusted Computing Group (TCG), which is a data encryption technology that does not depend on any file system. The following describes a cryptographic module disclosed in Non-Patent Literature 1.

Key management software for implementing the cryptographic module has a key database. The key database manages keys used in the cryptographic module in a tree structure. The key database is stored in a storage apparatus that exists outside the cryptographic module. For simplification, the following description is based on the assumption that the tree structure of the key database consists of three hierarchies, namely one root, two intermediate nodes, and four leaves. The root is connected to the two intermediate nodes that are located immediately below the root, and each of the two intermediate nodes is connected to the two leaves that are located immediately below the intermediate node. The root is assigned a root key. The first intermediate node and the second intermediate node respectively store a key A and a key B which have been encrypted by using the root key. The two leaves located immediately below the first intermediate node store their respective keys C and D which have been encrypted by using the key A of the first intermediate node. The two leaves located immediately below the second intermediate node store their respective keys E and F which have been encrypted by using the key B of the second intermediate node. Each of the keys C, D, E and F is a key used for encryption or decryption of data.

The cryptographic module includes a non-volatile memory, a cryptographic engine, and a key storage. The cryptographic module is tamper resistant, and is thus protected from external theft and tampering of processing data. The non-volatile memory stores therein the root key. The root key is a secret key (private key) of a public key cryptosystem, a secret key of a secret key cryptosystem, or the like. The cryptographic engine performs decryption of encrypted keys, encryption of keys, decryption of encrypted data, and encryption of data. The key storage stores therein keys for the use by the cryptographic engine.

As described above, the root key is protected in the cryptographic module that is tamper resistant. On the other hand, the other keys, namely the keys A, B, C, D, E and F are stored in the storage apparatus that exists outside the cryptographic module, and are protected by encryption.

When the key management software is requested to acquire the key C by an application program that exists outside the cryptographic module, the key management software acquires, from the key management database, the encrypted key A stored in the intermediate node that is the parent node of the leaf corresponding to the key C, and sends the encrypted key A to the cryptographic module. The cryptographic module causes the cryptographic engine to decrypt the encrypted key A by using the root key, thereby generating the key A. Next, the key management software acquires, from the key management database, the encrypted key C stored in the leaf corresponding to the key C, and outputs the encrypted key C to the cryptographic module. The cryptographic module causes the cryptographic engine to decrypt the encrypted key C by using the key A, and stores the key C, which has been obtained by the decryption, into the key storage. Then, the key management software is notified of the completion of the key loading, by the cryptographic module. Then the key loading onto the cryptographic module finishes.

After the key C is stored into the key storage of the cryptographic module, key management software is requested by the application program to encrypt or decrypt data. The key management software outputs the data received from the application program to the cryptographic module, and requests the cryptographic module to encrypt or decrypt the data by using the key C. The cryptographic module causes the cryptographic engine to encrypt or decrypt the received data by using the key C stored in the key storage, and to output a resulting ciphertext or plaintext. The key management software outputs the ciphertext or the plaintext, received from the cryptographic module, to the application program. Then the cryptographic processing finishes.

As described above, the use of the key database and the cryptographic module makes it possible to, at any time, keep the plaintext key (i.e., the root key) within the cryptographic module that is tamper resistant. This prevents theft of the plaintext key.

### [Citation List]

### [Patent Literature]

[Patent Literature 1] Japanese Patent Application Publication No. 2006-510958

### [Non-Patent Literature]

[Non-Patent Literature] TCG Specification Architecture Overview Specification Revision 1.3, 28th March 2007

### [Summary of Invention]

### [Technical Problem]

Here, assume the case where a single cryptographic module, and two key databases each having a different tree structure, are used according to the method disclosed in the Non-Patent Literature 1.

For example, in the case where an information processing apparatus uses a music distribution system and a movie distribution system and is supplied with music and movie, it is common that the respective key databases of the systems are different, because the music distribution system and the movie distribution system are run by different distributors.

In such a case, further assume that the distribution systems share a single encrypted data set, which has been obtained by encrypting a single data set by using their respective key databases.

If this is the case, when the shared data is updated, the information processing apparatus first performs the following operations with respect to the first key database. That is, the image processing apparatus decrypts the encrypted key of its intermediate node by using the root key, decrypts the encrypted key of its leaf by using the obtained key of the intermediate node, encrypts the updated shared data by using the obtained key of the leaf, and holds the encrypted shared data. Next, with respect to the second key database, in the same manner as with the first key database, the information processing apparatus decrypts the encrypted key of its intermediate node by using the root key, decrypts the encrypted key of its leaf by using the obtained key of the intermediate node, encrypts the updated shared data by using the obtained key of the leaf, and holds the encrypted shared data.

As described above, in the case of encrypting a single set of shared data by using two key databases having different tree structures, key encryption processing is required to be performed from the root to the leaf for each of the key databases. Thus, it is problematic that the processing load on the information processing apparatus is heavy.

To solve this problem, the present invention aims to provide information processing apparatus, method, program and integrated circuit that are capable of preventing the processing load from increasing to an excessive degree in the case where a plurality of cryptographic systems encrypt and then share a single set of data.

### [Solution to Problem]

To solve the problem, one aspect of the present invention is an information processing apparatus that is provided with a plurality of cryptographic systems each encrypting and storing data, comprising: a data acquisition unit configured to acquire target data that is to be encrypted in one of the cryptographic systems; a determination unit configured to determine whether the target data has been encrypted and stored in another one of the cryptographic systems; a key acquisition unit configured to acquire a key used in the encryption of the target data, when the determination unit judges that the target data has been encrypted and stored in the other one of the cryptographic systems; a key storage unit configured to be used in the one of the cryptographic systems; and a key writing unit configured to write the key acquired by the key acquisition unit into the key storage unit, in association with the target data.

### [Advantageous Effects of Invention]

With the stated structure, the information processing apparatus decrypts a key stored in one of the cryptographic systems directly from another one of the cryptographic systems. This saves the steps for acquiring the key in the one of the cryptographic systems, and expedites the synchronization of the updated data.

### [Brief Description of Drawings]

FIG. 1 is a block diagram showing a hardware structure of an information processing apparatus 10 pertaining to Embodiment 1 of the present invention.
FIG. 2 is a block diagram showing a software structure of the information processing apparatus 10.
FIG. 3 shows tree structures of a key database A 120 and a key database B121.
FIG. 4 shows an example data structure of a node information structure object 150.
FIG. 5 shows an example data structure of a node information structure object 160.
FIG. 6 shows an example data structure of a management table 220.
FIG. 7 is a flowchart showing procedures for loading a key onto a cryptographic processing unit 114.
FIG. 8 is a flowchart showing procedures for cryptographic processing performed on data.
FIG. 9 is a flowchart showing procedures for updating shared data B in synchronization.
FIG. 10 is a flowchart showing procedures for updating a management table 220, which continues to FIG. 11.
FIG. 11 is a flowchart showing procedures for updating the management table 220, which continues to FIG. 12.
FIG. 12 is a flowchart showing procedures for updating the management table 220, which is continued from FIG. 11.
FIG. 13 is a flowchart showing procedures for acquiring a key.
FIG. 14 is a flowchart showing procedures for updating shared data.
FIG. 15 is a block diagram showing the structure of a cryptographic processing unit 260 included in an information processing apparatus 10 pertaining to Embodiment 2 of the present invention.
FIG. 16 is a block diagram showing the structure of a cryptographic processing unit 270 included in an information processing apparatus 10 pertaining to Embodiment 3 of the present invention.
FIG. 17 shows an example data structure of a key table 274.
FIG. 18 shows another example data structure of the key table 274.
FIG. 19 shows an example data structure of a key storage 330.
FIG. 20 shows an example data structure of a block management table 331.
FIG. 21 shows example tree structures of a key database A283 and a key database B284 according to a modification of the present invention.
FIG. 22 shows an example data structure of management information 300 contained in a management table according to a modification of the present invention.
FIG. 23 is a flowchart showing procedures for updating a management table, performed by key management software according to a modification of the present invention.
FIG. 24 shows an example of a management table 320 according to a modification of the present invention, which contains hash values of encrypted data.
FIG. 25 is a flowchart showing procedures according to a modification of the present invention, performed for acquiring a key of data to be used in synchronization.
FIG. 26 is a flowchart showing procedures according to a modification of the present invention, performed for updating shared data managed by another cryptographic system, when synchronization of the shared data is requested.
FIG. 27 shows a software structure of an information processing apparatus pertaining to a modification of the present invention, which is externally provided with an instruction to update shared data that has been encrypted.
FIG. 28 is a flowchart showing procedures for data synchronization processing performed by an image processing apparatus according to a modification of the present invention when the image processing apparatus is externally provided with an instruction to update shared data that has been encrypted.

### [Description of Embodiments]

One aspect of the present invention, which is defined in Claim 1, is an information processing apparatus that is provided with a plurality of cryptographic systems each encrypting and storing data, comprising: a data acquisition unit configured to acquire target data that is to be encrypted in one of the cryptographic systems; a determination unit configured to determine whether the target data has been encrypted and stored in another one of the cryptographic systems; a key acquisition unit configured to acquire a key used in the encryption of the target data, when the determination unit judges that the target data has been encrypted and stored in the other one of the cryptographic systems; a key storage unit configured to be used in the one of the cryptographic systems; and a key writing unit configured to write the key acquired by the key acquisition unit into the key storage unit, in association with the target data.

Another aspect of the present invention, which is defined in Claim 2, is an information processing apparatus that is provided with a first cryptographic system and a second cryptographic system each encrypting and storing data, comprising: a data acquisition unit configured to acquire target data that is to be encrypted in the first cryptographic system; a determination unit configured to determine whether encrypted data that has been generated by encryption of the target data is stored in the second cryptographic system; a key acquisition unit configured to acquire a second key that has been used in the encryption of the target data performed in the second cryptographic system, when the determination unit judges that the encrypted data is stored in the second cryptographic system; a first key storage unit configured to be used in the first cryptographic system; a cryptographic processing unit configured to encrypt the second key by using a first key that is to be used in encryption of the target data; and a key writing unit configured to write the encrypted second key into the first key storage unit, in association with the target data.

In the information processing apparatus defined in Claim 3, the information processing apparatus further comprises: a second-data storage unit configured to store, as second data, the encrypted data that has been generated by the encryption of the target data performed in the second cryptographic system by using the second key, wherein the determination unit determines whether the second data is stored in the second-data storage unit.

In the information processing apparatus defined in Claim 4, the cryptographic processing unit is further configured to encrypt the target data within the first cryptographic system by using the first key, thereby generating first data, and the information processing apparatus further comprises: a first-data storage unit configured to be used in the first cryptographic system; and a data writing unit configured to write the first data into the first-data storage unit.

In the information processing apparatus defined in Claim 5, the information processing apparatus further comprises: a table storage unit configured to store a management table that contains location information that is associated with the target data and indicates a location within the second cryptographic system where the second data is stored, wherein the determination unit determines whether the management table stored in the table storage unit contains the location information associated with the target data, thereby determining whether the second data is stored in the second-data storage unit.

In the information processing apparatus defined in Claim 6, the data acquisition unit is further configured to acquire an instruction to update the target data, the determination unit determines, in response to the instruction, whether the second data, which has been generated by encrypting the target data that relates to the instruction, is stored in the second-data storage unit, the key acquisition unit is further configured to acquire the encrypted second key from the first key storage unit when the determination unit determines that the second data is stored in the second-data storage unit, the cryptographic processing unit is further configured to decrypt the encrypted second key acquired by the acquisition unit, and encrypts, by using the second key, the target data that has been updated, thereby generating updated second data, and the data writing unit is further configured to overwrite the second data stored in the second-data storage unit with the updated second data.

In the information processing apparatus defined in Claim 7, the cryptographic processing unit decrypts the encrypted second key by using a decryption key that corresponds to the first key.

In the information processing apparatus defined in Claim 8, the management table further contains key location information that is associated with the target data and indicates a location where the decryption key is stored, and the cryptographic processing unit uses the decryption key acquired from the location indicated by the key location information.

In the information processing apparatus defined in Claim 9, the cryptographic processing unit is further configured to encrypt, by using the first key, the target data that has been updated, thereby generating updated first data, and the data writing unit overwrites the first data stored in the first-data storage unit with the updated first data.

In the information processing apparatus defined in Claim 10, the data writing unit overwrites the second data stored in the second-data storage unit with the updated second data, when receiving a synchronization instruction after overwriting the first data stored in the first-data storage unit with the updated first data.

In the information processing apparatus defined in Claim 11, the location information contained in the management table indicates a location within the second-data storage unit where the second data is stored, and the data writing unit writes the updated second data into the location indicated by the location information.

In the information processing apparatus defined in Claim 12, the cryptographic processing unit is further configured to decrypt the first data stored in the first-data storage unit, thereby generating the target data, and to encrypt updated data generated based on the target data.

In the information processing apparatus defined in Claim 13, the management table contains the location information and a digest value of the target data in association with each other, and the determination unit calculates a digest value based on the target data, and determines whether the management table contains the location information that corresponds to the calculated digest value.

In the information processing apparatus defined in Claim 14, the management table contains the location information and a digest value of the first data in association with each other, and the determination unit calculates a digest value based on the first data stored in the first-data storage unit, and determines whether the management table contains the location information that corresponds to the calculated digest value.

In the information processing apparatus defined in Claim 15, the information processing apparatus further comprises: a second key storage unit configured to be used in the second cryptographic system, wherein the data acquisition unit is further configured to acquire the target data that is to be encrypted within the second cryptographic system, the determination unit is further configured to determine whether encrypted data that has been generated by encryption of the target data is stored in the first cryptographic system, the key acquisition unit is further configured to acquire the first key that has been used in the encryption of the target data performed in the first cryptographic system, when the determination unit judges that the encrypted data that has been generated by the encryption of the target data is stored in the first cryptographic system, the cryptographic processing unit is further configured to encrypt the first key by using the second key that is to be used in encryption of the target data, the encryption to be performed in the second cryptographic system, and the key writing unit is further configured to write, within the second cryptographic system, the encrypted first key into the second key storage unit, in association with the target data.

In the information processing apparatus defined in Claim 16, the cryptographic processing unit is further configured to encrypt the target data within the second cryptographic system by using the second key, thereby generating second data, and the information processing apparatus further comprises: a second-data storage unit configured to be used in the second cryptographic system, and a data writing unit configured to write the second data into the second storage unit.

In the information processing apparatus defined in Claim 17, the data acquisition unit is further configured to acquire an instruction to update the target data, the determination unit determines, in response to the instruction, whether the first data, which has been generated by encrypting the target data that relates to the instruction, is stored in the first-data storage unit, the key acquisition unit is further configured to acquire the encrypted first key from the second key storage unit when the determination unit determines that the first data is stored in the first-data storage unit, the cryptographic processing unit is further configured to decrypt the encrypted first key acquired by the acquisition unit, and to encrypt updated target data that has been generated by updating the target data, by using the first key, thereby generating updated first data, and the data writing unit is further configured to overwrite the first data stored in the first-data storage unit with the updated first data.

In the information processing apparatus defined in Claim 18, the first key storage unit manages keys in the first cryptographic system in a hierarchy structure, in which a level immediately below each key is assigned an encrypted key that is decryptable with the corresponding key, and the key writing unit writes the encrypted second key into a level immediately below the second key.

In the information processing apparatus defined in Claim 19,the information processing apparatus further comprises: a processor configured to operate according to an application program that uses the encrypted data in the first cryptographic system, wherein the application program includes an instruction to output the target data to the data acquisition unit, and the processor outputs the target data to the data acquisition unit.

In the information processing apparatus defined in Claim 20, the information processing apparatus further comprises: a key storage unit configured to store therein a key decrypted within the first cryptographic system, in association with first type information indicating that the key is for use within the first cryptographic system, and to store a key decrypted within the second cryptographic system, in association with second type information indicating that the key is for use within the second cryptographic system, wherein within the first cryptographic system, the cryptographic processing unit performs decryption by using the key associated with the first type information, within the second cryptographic system, the cryptographic processing unit performs decryption by using the key associated with the second type information, and the information processing apparatus further comprises: a control unit configured to cause the cryptographic processing unit to encrypt, within the second cryptographic system, updated target data that has been generated by updating the target data, by replacing the first type information which has been associated with the key stored in the key storage unit with the second type information, after the decryption has been performed within the first cryptographic system.

In the information processing apparatus defined in Claim 21, the key storage unit includes a plurality of storage blocks each having a predetermined capacity, and stores therein block information that indicates, for each key stored therein, the corresponding one of the storage blocks in which the key is stored.

In the information processing apparatus defined in Claim 22, the cryptographic processing unit includes: a control unit; a key storage unit configured to store therein the first key for use in the first cryptographic system; and a cryptographic engine unit configured to perform encryption by using the first key stored in the cryptographic processing unit, wherein when the key storage unit lacks enough empty space for storing the first key, the control unit causes the cryptographic engine unit to encrypt and externally save a key that has been stored in the storage unit to create an empty area, writes the first key into the empty area, and after encryption with use of the first key has been completed within the first cryptographic system, causes the cryptographic processing unit to decrypt the saved key that has been encrypted and to overwrite the first key with the saved key.

Another aspect of the present invention, which is defined in Claim 23, is a method used in an information processing apparatus that is provided with a first cryptographic system and a second cryptographic system each encrypting and storing data, the method comprising: a data acquisition step of acquiring target data that is to be encrypted in the first cryptographic system; a determination step of determining whether encrypted data that has been generated by encryption of the target data is stored in the second cryptographic system; a key acquisition step of acquiring a second key that has been used in the encryption of the target data performed in the second cryptographic system, when judged in the determination step that the encrypted data is stored in the second cryptographic system; a cryptographic processing step of encrypting the second key by using a first key that is to be used in encryption of the target data; and a key writing step of writing the encrypted second key into a first key storage unit, in association with the target data.

Another aspect of the present invention, which is defined in Claim 24, is a computer program used in an information processing apparatus that is provided with a first cryptographic system and a second cryptographic system each encrypting and storing data, the method causing the information processing apparatus as a computer to perform: a data acquisition step of acquiring target data that is to be encrypted in the first cryptographic system; a determination step of determining whether encrypted data that has been generated by encryption of the target data is stored in the second cryptographic system; a key acquisition step of acquiring a second key that has been used in the encryption of the target data performed in the second cryptographic system, when judged in the determination step that the encrypted data is stored in the second cryptographic system; a cryptographic processing step of encrypting the second key by using a first key that is to be used in encryption of the target data; and a key writing step of writing the encrypted second key into a first key storage unit, in association with the target data.

The computer program defined in Claim 25 is recorded on a non-transitory computer-readable recording medium.

Another aspect of the present invention, which is defined in Claim 26, is an integrated circuit that is provided with a first cryptographic system and a second cryptographic system each encrypting and storing data, comprising: a data acquisition unit configured to acquire target data that is to be encrypted in the first cryptographic system; a determination unit configured to determine whether encrypted data that has been generated by encryption of the target data is stored in the second cryptographic system; a key acquisition unit configured to acquire a second key that has been used in the encryption of the target data performed in the second cryptographic system, when the determination unit judges that the encrypted data is stored in the second cryptographic system; a first key storage unit configured to be used in the first cryptographic system; a cryptographic processing unit configured to encrypt the second key by using a first key that is to be used in encryption of the target data; and a key writing unit configured to write the encrypted second key into the first key storage unit, in association with the target data.

The following describe Embodiments of the present invention, with reference to the drawings.

### 1. Embodiment 1

An information processing apparatus 10 as an embodiment of the present invention is described below.

### Overview of Information Processing Apparatus 10

In the information processing apparatus 10, a first cryptographic system and a second cryptographic system operate independently from each other and share a single set of data. The first and second cryptographic systems are of different kinds, each including a key database and encrypted data sets.

For example, the information processing apparatus 10 uses a music distribution system for distributing music contents and a movie distribution system for distributing movie contents, and is supplied with music contents from the music distribution system and with movie contents from the movie distribution system. The music distribution system and the movie distribution system are run by different distributors, namely a music distributor and a movie distributor. The first cryptographic system is a cryptographic system for the music distribution system, and the second cryptographic system is a cryptographic system for the movie distribution system. An example of the data sets to be shared between the first and the second cryptographic systems is an address of the user of the information processing apparatus 10.

### <The Case of Sharing Address>

The following explains the case of sharing the address, as an example case.

Here, assume that an encrypted address of the user is already held in the second cryptographic system for the movie distribution system. Specifically, the information processing apparatus 10 has an encrypted-data substorage for the second cryptographic system. The encrypted-data substorage stores therein a second encrypted target data, namely an encrypted address generated by encrypting an address as the target data by using a second key of the second cryptographic system. On the other hand, assume that the first cryptographic system does not hold the encrypted address of the user.

The information processing apparatus 10 acquires the address of the user as the encryption target data in order to encrypt and hold the address of the user in the first cryptographic system for the music distribution system. Next, the information processing apparatus 10 determines whether or not the encrypted data (i.e. encrypted address) generated by encrypting the address as the target data is stored in the second cryptographic system. Specifically, the information processing apparatus 10 determines whether the second encrypted target data (i.e. encrypted address) is stored in the encrypted-data substorage for the second cryptographic system. Next, when determining that the encrypted data (i.e. encrypted address) is stored in the second cryptographic system, the information processing apparatus 10 acquires the second key from the second cryptographic system. The second key is the key used in the second cryptographic system to generate the encrypted data (i.e. encrypted address). The information processing apparatus 10 holds a key database A used in the first cryptographic system. The information processing apparatus 10 generates an encrypted second key by encrypting the acquired second key by using a first key that is the key used in the first cryptographic system to encrypt the target data (i.e. the address of the user). Then the information processing apparatus 10 writes the generated encrypted second key into the key database A of the first cryptographic system in association with the target data (i.e. the address of the user).

Also, the information processing apparatus 10 generates a first encrypted target data (i.e. encrypted address) by encrypting the target data (i.e. the address of the user) in the first cryptographic system by using the first key. The information processing apparatus 10 has an encrypted-data substorage for the first cryptographic system. The information processing apparatus 10 writes the generated first encrypted target data (i.e. encrypted address) into the encrypted-data substorage for the first cryptographic system.

In this way, the first cryptographic system acquires the encrypted address, and thus the first cryptographic system and the second cryptographic system share the address. Moreover, the first cryptographic system thus encrypts the second key used in the second cryptographic system to encrypt the address, and holds the encrypted second key in association with the address.

### <The Case of Updating Shared Address>

The following explains, as an example case, the case where a user of the information processing apparatus 10 updates the target data, namely the address, shared between the first cryptographic system and the second cryptographic system.

In the information processing apparatus 10, the first cryptographic system acquires an instruction to update the address as the target data. In the same manner as described above, the information processing apparatus 10 determines whether the encrypted data (i.e. encrypted old address) generated by encrypting the target data (i.e. old address) relating to the instruction is stored within the second cryptographic system. When judged that the encrypted data is stored within the second cryptographic system, the information processing apparatus 10 acquires the encrypted second key from the key database A, and generates the second key by decrypting the acquired encrypted second key. Using the generated second key, the information processing apparatus 10 encrypts the updated data (i.e. new address) obtained by updating the target data (i.e. old address) to generate second encrypted updated data (i.e. encrypted new address), and overwrites the second encrypted target data (i.e. encrypted old address) stored in the encrypted-data substorage for the second cryptographic system with the generated second encrypted updated data (i.e. encrypted new address).

Also, in the information processing apparatus 10, by using the first key, the first cryptographic system encrypts the updated data (i.e. new address) to generate first encrypted updated data (i.e. encrypted new address), and overwrites the first encrypted target data (i.e. encrypted old address) stored in the encrypted-data substorage for the first cryptographic system with the generated first encrypted updated data (i.e. encrypted new address).

In this way, the first cryptographic system solely acquires the second key used in the second cryptographic system without dependency on the second cryptographic system.

### 1.1 Hardware Structure of Information Processing Apparatus 10

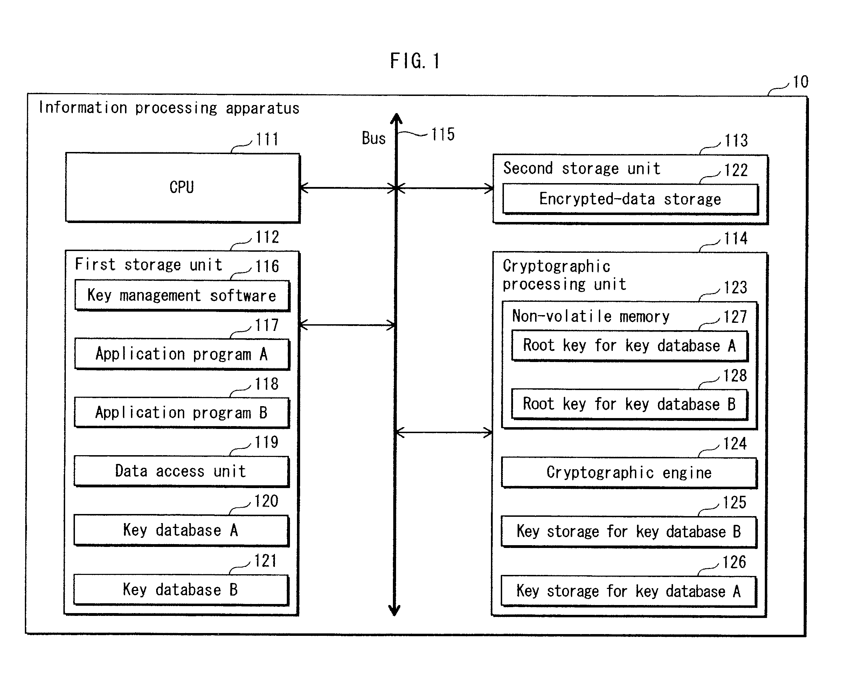

As shown in FIG. 1, the information processing apparatus 10 includes a CPU 111, a first storage unit 112, a second storage unit 113, a cryptographic processing unit 114, a bus 115 and an I/O unit (not depicted). The CPU 111, the first storage unit 112, the second storage unit 113, the cryptographic processing unit 114 and the I/O unit are connected with each other via the bus 115.

The following describe each component of the information processing apparatus 10 in detail.

The CPU 111 is a microprocessor, which fetches instruction codes contained in programs or the likes stored in the first storage unit 112, and decodes and executes the codes to control the operations of the entirety of the information processing apparatus 10.

The first storage unit 112 is composed of a volatile semiconductor memory, and stores therein key management software 116, an application program A117, an application program B118, a data access unit 119, a key database A 120 and a key database B 121.

The second storage unit 113 is composed of a hard disk unit 122, and has an encrypted-data storage 122. The encrypted-data storage 122 is composed of an encrypted-data substorage 122a and an encrypted-data substorage 122b. The encrypted-data storage 122 stores therein encrypted data for the use by the application program A117, the application program B118, and so on. The encrypted-data substorage 122a stores therein encrypted data for the use by the application program A 117. The e encrypted-data substorage 122b stores therein encrypted data for the use by the application program B118.

The cryptographic processing unit 114 is composed of a non-volatile memory 123, a cryptographic engine 124, a key storage 125 for the key database B, and a key storage 126 for the key database A. The cryptographic processing unit 114 is tamper resistant and is thus protected against theft of and tampering with processing data from the outside of the cryptographic processing unit 114.

The non-volatile memory 123 is composed of a non-volatile semiconductor memory that does not lose the stored data even when not powered from an external power source. The non-volatile memory 123 stores therein a root key 127 for the key database A and a root key 128 for the key database B.

Each of the root key 127 for the key database A and the root key 128 for the key database B is a secret key (private key) of a public key cryptosystem (also referred to as "asymmetric key cryptosystem") or a secret key of a secret key cryptosystem (also referred to as "symmetric key cryptosystem"). The root key 127 for the key database A and the root key 128 for the key database B are a key corresponding to the root of the key database A and a key corresponding to the root of the key database B, respectively. The root key 127 for the key database A and the root key 128 for the key database B are used for decryption of the keys of the other nodes of the key database A and the key database B, respectively. Thus, the root keys 127 and 128 are held and managed by the cryptographic processing unit 114 that is tamper resistant, instead of the key database A120 or the key database B121 on the first storage 112. Note that the recording capacity of the cryptographic processing unit 114 needs to be large if the non-volatile memory 123 of the tamper-resistant cryptographic processing unit 114 stores all the keys included in the key database A 120 and the key database B121. Thus, only the root keys, which are required for the decryption of the keys of all the other keys, are stored and protected in the non-volatile memory 123 of the tamper-resistant cryptographic processing unit 114.

The cryptographic engine 124 performs decryption of encrypted keys, encryption of keys, decryption of encrypted data, and encryption of data. For the cryptographic processing, a cryptographic algorithm such as RSA for a public key cryptosystem and AES for a secret key cryptosystem may be used.

The key storage 125 for the key database B stores the keys that are under the management of the key database B121 when using the cryptographic engine 124.

The key storage 126 for the key database A stores the keys that are under the management of the key database A120 when using the cryptographic engine 124.

Note that the key database A 120, the key storage 126 for the key database A, the root key 127 for the key database A, and the encrypted-data substorage 122a constitutes the first cryptographic system, and the key database B121, the key storage 125 for the key database B, the root key 128 for the key database B, and the encrypted-data substorage 122b constitutes the second cryptographic system.

### 1.2 Software Structure of Information Processing Apparatus 10

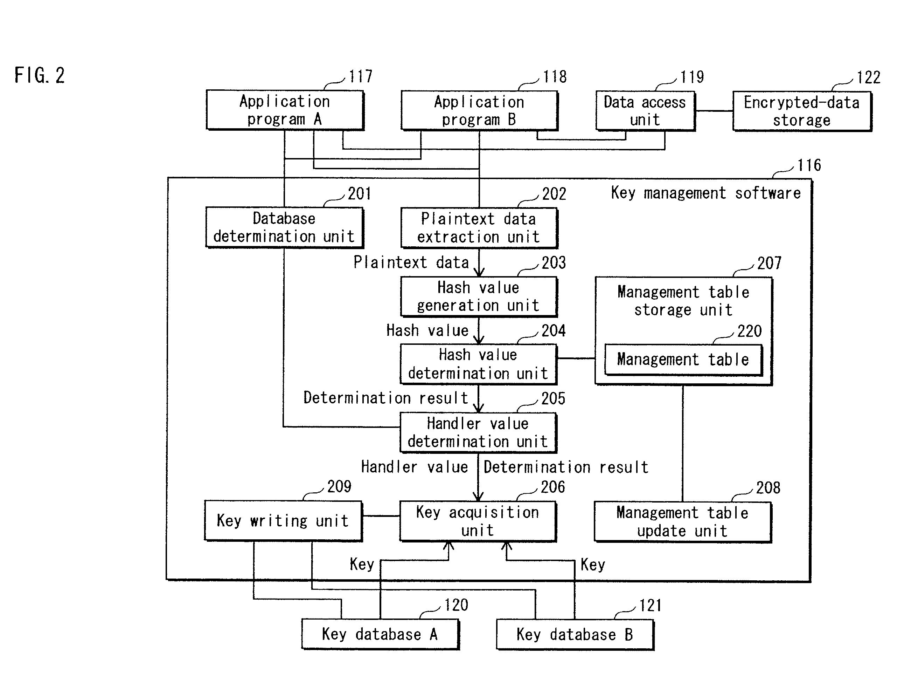

The following describe the software structure of the information processing apparatus 10, with reference to FIG. 2.

In the information processing apparatus 10, the application program A117 and the application program B118 accesses the key database A120 and the key database B121 respectively via the key management software 116, and access the encrypted-data storage 122 via the data access unit 119. Although not depicted in the drawings, an OS, a device driver, and other application programs run in the information processing apparatus 10 as well.

As is described later, the application program A117 and the application program B118 share data B.

### (1) Key Database A 120 and Key Database B 121

This section describes the key database A120 and the key database B121.

### Key Database A 120

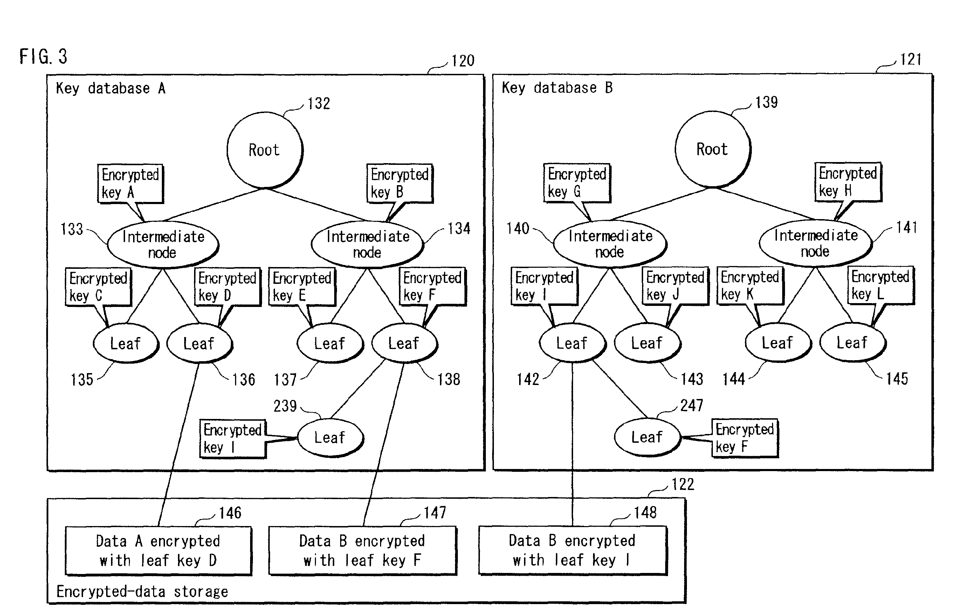

The key database A120 is a database for managing keys by using an N-ary tree structure. The key database A120 is used by the application program A117. FIG. 3 shows an example tree structure used by the key database A120.

The tree structure of the key database A120 is composed of four levels as shown in FIG. 3 for example, namely one root 132, two intermediate nodes 133 and 134, four leaves 135-138, and one leaf 239. The root 132 is connected to the two intermediate nodes 133 and 134 that are located immediately below the root 132. The intermediate node 133 is connected to the two leaves 135 and 136 that are located immediately below the intermediate node 133. The intermediate node 134 is connected to the two leaves 137 and 138 that are located immediately below the intermediate node 134. The leaf 138 is connected to a leaf 239 that is located immediately below the leaf 138.

The root 132 is assigned the root key 127 for the key database A. As described above, the root key 127 is stored in the non-volatile memory 123 of the cryptographic processing unit 114, not in the key database A 120.

The intermediate node 133 and 134 are assigned the key A and the key B, respectively. The leaves 135, 136, 137, 138 and 239 are assigned the key C, the key D, the key E, the key F and the key I, respectively.

The intermediate node 133 stores therein the key A that has been encrypted by using the root key 127. The intermediate node 134 stores therein the key B that has been encrypted by using the root key 127. The leaf 135 stores therein the key C that has been encrypted by using the key A of the intermediate node 133.The leaf 136 stores therein the key D that has been encrypted by using the key A of the intermediate node 133.The leaf 137 stores therein the key E that has been encrypted by using the key B of the intermediate node 134. The leaf 138 stores therein the key F that has been encrypted by using the key B of the intermediate node 134. Each of the keys C, D, E and F is a key used for encryption or decryption of data.

The leaf 239 stores therein the key I of the leaf 142 of the key database B121, which has been encrypted. The key database B121 is described later. The key I stored in the leaf 239 has been encrypted by using the key F of the leaf 138.

As shown in FIG. 3, the encrypted data A (146) is generated by encrypting the data A by using the key D assigned to the leaf 136, for example. The encrypted data B (147) is generated by encrypting the data B by using the key F assigned to the leaf 138.

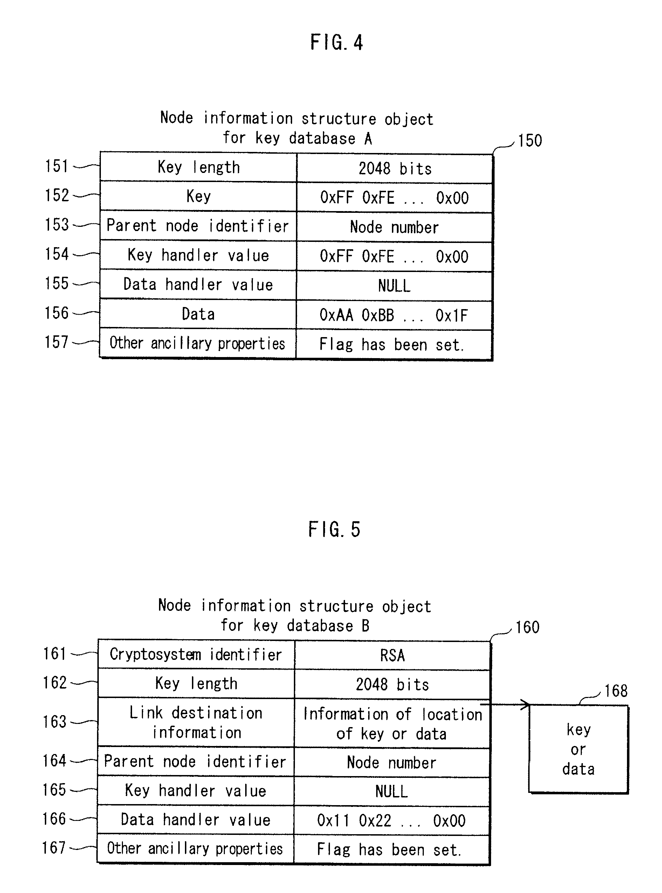

In the first storage 112, the key database A120 contains a plurality of node information structure objects which constitute the tree structure. The node information structure objects correspond one-to-one to the root, the intermediate nodes and the leaves of the key database A120. The node information structure objects are used for placing the keys under the management of the key database A120. FIG. 4 shows an example data structure of a node information structure object 150 of the key database A 120.

As shown in FIG. 4, the node information structure object 150 includes a field 151 for a key length, a field 152 for a key, a field 153 for a parent node identifier, a field 154 for a key handler value, a field 155 for a data handler value, a field 156 for data and a field 157 for other ancillary properties.

The field 151 for a key length stores a key length used for the cryptographic processing. The value to be stored in this field may be a bit length or a byte length. Also, an identifier corresponding to a predetermined key length may be stored therein.

The field 152 for a key stores an encrypted key that has been generated by encrypting a key used for the cryptographic processing. Alternatively, the field 152 may store location information that indicates the location where the encrypted key exists. Note, however, that the key corresponding to the root is not stored in the field 152 of the node information structure object. Also note that the key stored in the field 152 has been encrypted by using the key of the intermediate node or the root (i.e. the key of the corresponding parent node), which is determined based on the node number indicated by the parent node identifier in the field 153.

The field 153 for a parent node identifier stores an identifier designating the parent node of a node corresponding to the node information structure object 150. Alternatively, the field 153 may store location information that indicates the location of the parent node. Also, the field 153 may store a predetermined identifier or an identifier that has been dynamically generated. These identifiers specify the parent node.

The field 154 for a key handler value stores therein location information indicating the location where the encrypted key assigned to the corresponding node exists. In the case where no encrypted key exists, NULL is stored therein.

The field 155 for a data handler value, when data encrypted by using the key corresponding to the corresponding node information structure object 150 exists, stores therein the location information indicating the location of plaintext data based on which the encrypted data has been generated. In the case where no such encrypted data exists, NULL is stored therein.

The field 156 for data, when data is stored by using the node information structure object 150, stores therein encrypted data.

The field 157 for other ancillary properties stores therein other properties required by each node.

For example, the field for a key of the node information structure object of the leaf 239 stores therein the key I which has been encrypted and corresponds to the leaf 142 of the key database B121. The key database B121 is described later. The field for a parent node identifier of the node information structure object of the leaf 239 stores therein the identifier (i.e. node number) identifying the leaf 138. Note that the leaf 142 is a leaf for storing the key used for encrypting the data B in the key database B121.

As described above, the key database A in the first cryptographic system manages the keys in a hierarchy structure. Below each key in the hierarchy structure, an encrypted key is assigned such that the encrypted key can be decrypted by using the corresponding key.

### Key Database B121

The key database B121 is a database for managing keys by using an N-ary tree structure. The key database B121 is used by the application program B118. FIG. 3 shows an example tree structure used by the key database B121.

The tree structure of the key database B121 is composed of four levels as shown in FIG. 3 for example, namely one root 139, two intermediate nodes 140 and 141, four leaves 142-145, and one leaf 247. The root 139 is connected to the two intermediate nodes 140 and 141 that are located immediately below the root 139. The intermediate node 140 is connected to the two leaves 142 and 143 that are located immediately below the intermediate node 140. The intermediate node 141 is connected to the two leaves 144 and 145 that are located immediately below the intermediate node 141. The leaf 142 is connected to a leaf 247 that is located immediately below the leaf 142.

The root 139 is assigned the root key 128 for the key database B. As described above, the root key 128 is stored in the non-volatile memory 123 of the cryptographic processing unit 114, not in the key database B121.

The intermediate node 140 and 141 are assigned the key G and the key H, respectively. The leaves 142, 143, 144, 145 and 247 are assigned the key I, the key J, the key K, the key L and the key F, respectively.

The intermediate node 140 stores therein the key G that has been encrypted by using the root key 128. The intermediate node 141 stores therein the key H that has been encrypted by using the root key 128. The leaf 142 stores therein the key I that has been encrypted by using the key G of the intermediate node 140. The leaf 143 stores therein the key J that has been encrypted by using the key G of the intermediate node 140.The leaf 144 stores therein the key K that has been encrypted by using the key H of the intermediate node 141.The leaf 145 stores therein the key L that has been encrypted by using the key H of the intermediate node 141. Each of the keys I, J, K and L is a key used for encryption or decryption of data.

The leaf 247 stores therein the key F of the leaf 138 of the key database A120, which has been encrypted. The key F stored in the leaf 247 has been encrypted by using the key I of the leaf 142.

As shown in FIG. 3, the encrypted data B (148) is generated by encrypting the data B by using the key I assigned to the leaf 142, for example.

The encrypted data B (147) and the encrypted data B (148) shown in FIG. 3 have been encrypted based on data B in common. In other words, the application program A117 and the application program B118 share the data B.

In the first storage 112, the key database B121 contains a plurality of node information structure objects which constitute the tree structure. The node information structure objects correspond one-to-one to the root, the intermediate nodes and the leaves of the key database B121. The node information structure objects are used for placing the keys under the management of the key database B121. FIG. 5 shows an example data structure of a node information structure object 160 of the key database B121.

As shown in FIG. 5, the node information structure object 160 includes a field 161 for a cryptosystem identifier, a field 162 for a key length, a field 163 for link destination information indicating the locations where the key and the data are stored, a field 164 for a parent node identifier, a field 165 for a key handler value, a field 166 for a data handler value, a field 167 for other ancillary properties.

The node information structure object 160 shown in FIG. 5 includes the field 161 for a cryptosystem identifier and a field 163 for link destination information, instead of the field 152 for a key and the field 156 for data included in the node information structure object 150 shown in FIG. 4. The descriptions of the other elements are omitted.

The field 161 for a cryptosystem identifier stores therein a name or an identifier of a cryptographic algorithm, such as RSA and ECC (Elliptic Curve Cryptosystem) for a public key cryptosystem and AES and 3DES for a secret key cryptosystem. In the case of a public key cryptosystem, this field stores therein a secret key encrypted by using the public key assigned to the parent node, and a public key.

The field 163 for link destination information stores therein information indicating the location of a key file used for cryptographic processing or an encrypted data file.

For example, the location indicated by the link destination information of the node information structure object of the leaf 247 stores therein the key F which has been encrypted and corresponds to the leaf 138 of the key database A120. The field for a parent node identifier of the node information structure object of the leaf 247 stores therein the identifier (i.e. node number) identifying the leaf 142. Note that the leaf 138 is a leaf for storing the key used for encrypting the data B in the key database A120.

As described above, the key database B in the second cryptographic system manages the keys in a hierarchy structure. Below each key in the hierarchy structure, an encrypted key is assigned such that the encrypted key can be decrypted by using the corresponding key.

### (2) Encrypted-data Storage 122

The encrypted-data Storage 122 stores therein data which has been encrypted. The encrypted-data storage 122 is composed of an encrypted-data substorage 122a and an encrypted-data substorage 122b.

The encrypted-data substorage 122a stores therein, for example, the data A (146) that has been encrypted by using the key D of the leaf 136 and the data B (147) that has been encrypted by using the key F of the leaf 138. The encrypted-data substorage 122b stores therein, for example, the data B (148) that has been encrypted by using the key I of the leaf 142.

The encrypted data B (147) and the encrypted data B (148) shown in FIG. 3 have been encrypted based on the data B in common. In other words, the application program A117 and the application program B118 share the data B.

### (3) Application Program A117, Application Program B 118, and Data Access Unit 119

The application program A117 is software that uses encrypted data stored in the encrypted-data storage 122, by using the keys that are under the management of the key database A 120. The application program A117 includes computer instruction codes for requesting the first cryptographic system to perform data processing. The codes include, for example, a code for requesting the first cryptographic system to newly register data (i.e. to encrypt and store the data), to refer to data (i.e. to decrypt and refer to the data), to update data (i.e. to decrypt and update the data, and to re-encrypt and store the data), and to delete the data. The application program A 117 also includes an instruction code for requesting output of target data to be encrypted.

The application program B118 is software that uses encrypted data stored in the encrypted-data storage 122, by using the keys that are under the management of the key database B121. The application program B118 includes computer instruction codes for requesting the second cryptographic system to perform data processing. The codes include, for example, a code for requesting the second cryptographic system to newly register data (i.e. to encrypt and store the data), to refer to data (i.e. to decrypt and refer to the data), to update data (i.e. to decrypt and update the data, and to re-encrypt and store the data), and to delete the data. The application program B118 also includes an instruction code for requesting output of target data to be encrypted.

The data access unit 119 is software for accessing the encrypted-data storage 122, reading encrypted data, updating data or writing data.

### (4) Key Management Software 116

As shown in FIG. 2, the key management software 116 includes a database determination unit 201, a plaintext data extraction unit 202, a hash value generation unit 203, a hash value determination unit 204, a handler value determination unit 205, a key acquisition unit 206, a management table storage unit 207, a management table update unit 208, and a key writing unit 209. The hash value generation unit 203, the hash value determination unit 204 and the management table storage unit 207 constitutes a determination unit that determines whether or not target data to be encrypted within one of the cryptographic systems is encrypted and stored in the other cryptographic system. When the determination unit determines affirmatively, the key acquisition unit 206 acquires the key of the encrypted data stored in the other cryptographic system. In said one of the cryptographic system, the key writing unit 209 writes the acquired key into the key database A120 (or the key database B121) in association with the target data.

### Management Table Storage Unit 207

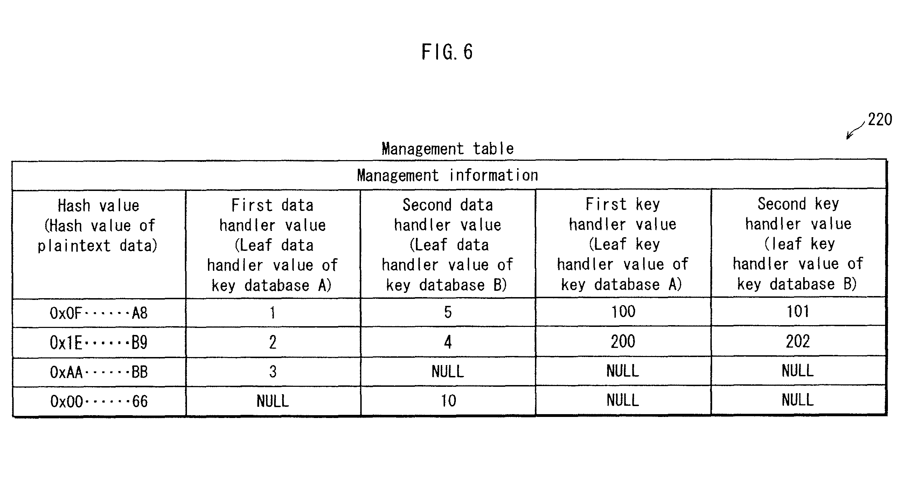

The management table storage unit 207 holds therein the management table 220 as shown in FIG. 6.

The management table 220 shows how the plurality of encrypted data sets stored in the encrypted-data storage 122 are managed with use of the keys of the key database A 120 and the key database B121. The entries constituting the management table 220 are hash values generated from data sets to be encrypted and placed under the management.

As shown in FIG. 6, the management table 220 consists of a plurality of management information sets. The management information sets correspond one-to-one to a plurality of encrypted data sets stored in the encrypted-data storage. Each management information set consists of a hash value, a first data handler value, a second data handler value, a first key handler value and a second key handler value.

The hash value has been generated from the plaintext data based on which the corresponding encrypted data set has been generated.

The first data handler value is the plaintext data based on which the hash value of the corresponding management information set has been generated, and is the data handler value of the plaintext data based on which the encrypted data set assigned to a leaf of the key database A has been generated. The data handler value of plaintext data is location information indicating the location of the plaintext data. The first data handler value corresponds to the data handler value 155 of the node information structure object 150 shown in FIG. 4. When no plaintext data is under the management of the key database A120, the first data handler value is NULL.

The second data handler value is the plaintext data based on which the hash value of the corresponding management information set has been generated, and is the data handler value of the plaintext data based on which the encrypted data set assigned to a leaf of the key database B has been generated. The data handler value of plaintext data is location information indicating the location of the plaintext data. The second data handler value corresponds to the data handler value 166 of the node information structure object 160 shown in FIG. 5. When no plaintext data is under the management of the key database B 121, the second data handler value is NULL.

The first key handler value is a handler value of the key used for encrypting the plaintext data based on which the hash value of the corresponding management information set has been generated. In other words, when the corresponding encrypted data set is under the management of the key database A 120, the first key handler value is location information indicating the location within the key database A 120 of the encrypted key generated by encrypting the key used for encrypting the data set. When no encrypted data set is under the management of the key database A 120, the first key handler value is NULL. The first key handler value corresponds to the key handler value 154 of the node information structure object 150 shown in FIG. 4.

The second key handler value is a handler value of the key used for encrypting the plaintext data based on which the hash value of the corresponding management information set has been generated. In other words, when the corresponding encrypted data set is under the management of the key database B121, the second key handler value is location information indicating the location within the key database B121 of the encrypted key generated by encrypting the key used for encrypting the data set. When no encrypted data set is under the management of the key database B121, the second key handler value is NULL. The second key handler value corresponds to the key handler value 165 of the node information structure object 160 shown in FIG. 5.

### Other Elements of Key Management Software 116

The database determination unit 201 receives a node information structure object from an application program as the request source, and determines which, between the key database A 120 and the key database B121, is to be used by the request source application program, by using the received node information structure object. When the received node information structure object is the node information structure object 150 shown in FIG. 4, the database determination unit 201 determines that the key database A120 is to be used by the application program. When the received node information structure object is the node information structure object 160 shown in FIG. 5, the database determination unit 201 determines that the key database B121 is to be used by the application program. Next, the database determination unit 201 outputs the determination result to the handler value determination unit 205.

The plaintext data extraction unit 202 acquires the node information structure object from the application program as the request source, extracts a data handler value from the acquired node information structure object. When the extracted data handler value is not NULL, the plaintext data extraction unit 202 acquires plaintext data from the location indicated by the extracted data handler value, and outputs the acquired plaintext data to the hash value generation unit 203. As described above, the plaintext data extraction unit 202 is a unit for acquiring target data to be encrypted within one of the cryptographic systems.

The hash value generation unit 203 receives the plaintext data from the plaintext data extraction unit 202, and generates a unique hash value (i.e. digest value) from the received plaintext data. For example, the hash value generation unit 203 uses a one-way function (e.g. SHA I algorithm) to generate a unique hash value, and outputs the generated hash value to the hash value determination unit 204.

The hash value determination unit 204 receives the hash value from the hash value generation unit 203, and refers to the hash values stored in the management table 220 which is under the management of the management table storage unit 207. Thus, the hash value determination unit 204 determines whether the hash value generated by the hash value generation unit 203 matches any of the hash values stored in the management table 220. The hash value determination unit 204 outputs the determination result to the handler value determination unit 205. Also, when any of the hash values matches, the hash value determination unit 204 reads the management information set that includes the hash value from the management table 220, and outputs the read management information set to the handler value determination unit 205.

The handler value determination unit 205 receives the determination result about the database from the database determination unit 201. The handler value determination unit 205 also receives the determination result from the hash value determination unit 204. When any of the hash values matches, the handler value determination unit 205 receives the management information set including the hash value. When the received determination result shows the existence of the hash value that matches the hash value generated by the hash value generation unit 203, the handler value determination unit 205 determines whether the first key handler value or the second key handler value contained in the received management information set is NULL or not.

To determine which, between the first key handler value and the second key handler value, is to be subject to the determination, the handler value determination unit 205 uses the database determination result received from the database determination unit 201. In other words, when the database determination result indicates the use of the key database A, the handler value determination unit 205 makes the determination on the first key handler value as the key handler value of a leaf of the key database A. On the other hand, when the database determination result indicates the use of the key database B, the handler value determination unit 205 makes the determination on the second key handler value as the key handler value of a leaf of the key database B. Next, the handler value determination unit 205 outputs the determination result to the key acquisition unit 206. When the determination result indicates that the key handler value is NULL, and furthermore the result of the database determination indicates the use of the key database A, the handler value determination unit 205 outputs the first key handler value to the key acquisition unit 206. When the result of the database determination indicates the use of the key database B, the handler value determination unit 205 outputs the second key handler value to the key acquisition unit 206.

The key acquisition unit 206 receives the determination result from the handler value determination unit 205. When the received determination result indicates that the key handler value is not NULL, the key acquisition unit 206 also receives the key handler value. Next, the key acquisition unit 206 acquires an encrypted key from the location indicated by the received key handler value, and outputs the acquired encrypted key to the cryptographic engine 124 of the cryptographic processing unit 114.

The key writing unit 209 updates the node information structure object of the key database A 120 or the key database B121. Also, the key writing unit 209 newly generates another node information structure object, and adds the new node information structure object into the key database A120 or the key database B121. The key writing unit 209 also assigns and writes the encrypted key to the level that is immediately below the level of the encrypted key.

The management table update unit 208 updates the management table that is under the management of the management table storage unit 207.

### 1.3 Operations of Information Processing Apparatus 10

The following describes the operations of the information processing apparatus 10.

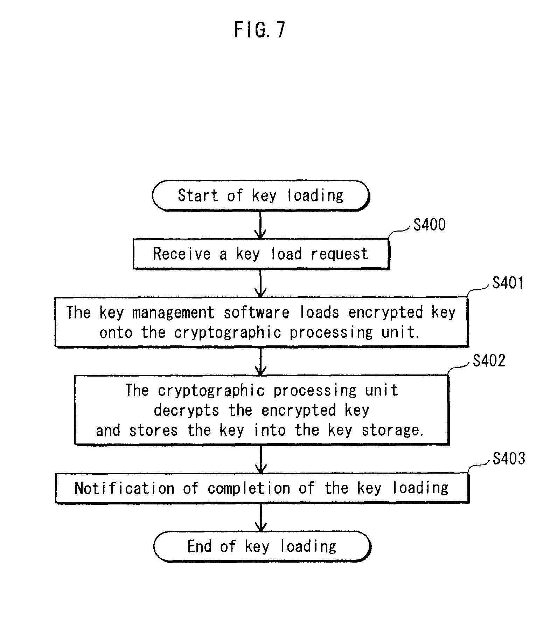

(1) Operations for loading a key onto the cryptographic processing unit 1 14 and operations for cryptographic processing on data
   (a) The following explains the operations for loading a key onto the cryptographic processing unit 114, with reference to the flowchart shown in FIG. 7.

For example, the key management software 116 is requested by the application program A117 to load the key A shown in FIG. 3 (S400).

Next, the key management software 116 acquires, from the key database A 120, the encrypted key A stored in the node corresponding to the key A that has been designated, and outputs the acquired encrypted key A to the cryptographic processing unit 114 (S401).

Next, the cryptographic processing unit 114 receives the encrypted key A from the key management software 116, and causes the cryptographic engine 124 to decrypt the encrypted key A by using the root key 127 stored in the non-volatile memory 123. Then, the cryptographic processing unit 1 14 stores the key A into the key storage 126 for the key database A (S402).

Then, the key management software 116 is notified by the cryptographic processing unit 114 of the completion of the loading of the key A (S403).

Thus the loading processing of the key onto the cryptographic processing unit 114 finishes.

The operations described above is also applicable to the loading of the keys C and D onto the cryptographic processing unit 114. For example, in the case of loading the key C onto the cryptographic processing unit 114 based on the encrypted key C, the key A is first loaded according to the Steps S400-403, and then the same operations as Steps S400-S403 are performed. If this is the case, in Step S401 in particular, the key management software 116 acquires the encrypted key C from the key database A 120, and in Step S402, the cryptographic processing unit 113 decrypts the encrypted key C by using the key A stored in the key storage 126 for the key database A. The same applies to the loading of the key D.

In order to load the key C shown in FIG. 3 onto the cryptographic processing unit 114, the following procedures are to be carried out.

(i) Load the key A according to the Steps S400-S403 as described above.

(ii) On completion of the loading of the key A, the key C is loaded in the same manner as in Steps S400-S403, as described above.

In order to load the key I of the leaf 239 of the key database A 120 shown in FIG. 3 to the cryptographic processing unit 114, the following procedures are to be carried out.

(i) Load the key B according to the Steps S400-S403 as described above.

(ii) On completion of the loading of the key B, the key F is loaded in the same manner as in Steps S400-S403, as described above. If this is the case, in Step S401, the key management software 116 acquires the encrypted key F from the key database A120, and in Step S402, the cryptographic processing unit 114 decrypts the encrypted key F by using the key B stored in the key storage 126 for the key database A.

(iii) On completion of the loading of the key F, the key I is loaded in the same manner as in Steps S400-S403, as described above. If this is the case, in Step S401, the key management software 116 acquires the encrypted key I from the key database A120, and in Step S402, the cryptographic processing unit 114 decrypts the encrypted key I by using the key F stored in the key storage 126 for the key database A.

The same operations are applied in the case where loading of a key is requested by the application program B118.

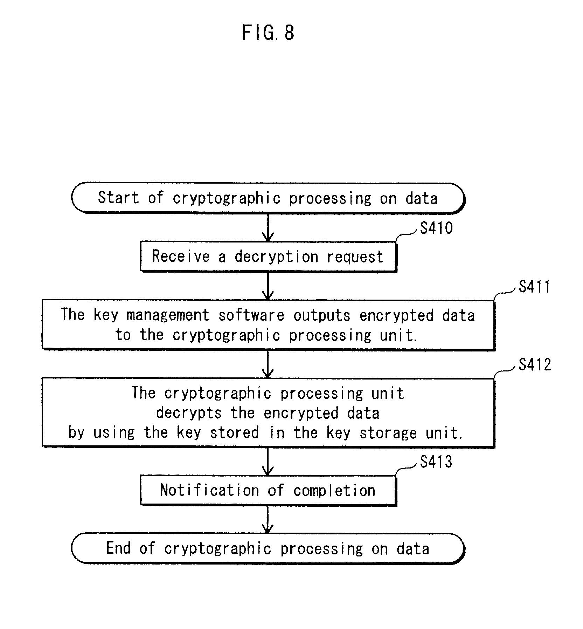

(b) Next, the following describes cryptographic processing on data, with reference to the flowchart shown in FIG. 8. For example, the following explains the case of decrypting the encrypted data B (147) shown in FIG. 3. Note that the key storage 126 for the key database A stores therein the key F.

After the key F is stored in the key storage 126 for the key database A, the key management software 116 is requested by the application program A117 to decrypt the encrypted data B (147) (S410).

Next, the key management software 116 receives the encrypted data B(147) from the application program A 117, outputs the encrypted data B (147) to the cryptographic processing unit 114, and requests the cryptographic processing unit 114 to decrypt the encrypted data B (147) by using the key F (S411).

Next, the cryptographic processing 114 receives the encrypted data B (147), causes the cryptographic engine 124 to decrypt the encrypted data B (147) by using the key F stored in the key storage 126 for the key database A, and outputs the data B (S412).

Next, the key management software 116 receives the data B from the cryptographic processing unit 114, outputs the data B to the application program A117, and notifies the application program A117 of the completion of the decryption.

### Thus the decryption processing finishes.

Note that the data encryption is to be performed in the same manner as described above. If this is the case, in Step S412, the cryptographic engine 124 encrypts data by using the key stored in the key storage.

### (2) Data Updating and Synchronization

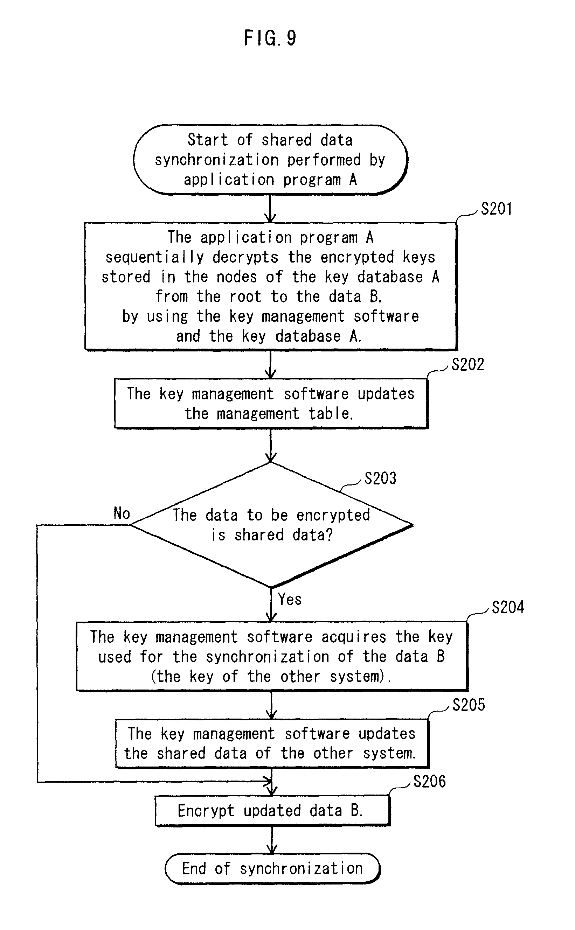

As described above, the application program A117 and the application program B118 share the data B. The following explains the operations of the information processing apparatus 10 performed for updating the shared data B in synchronization, with reference to the flowchart shown in FIG. 9.

When the application program A117 updates the data B shared with the application program B118, the information processing apparatus 10 operates as follows.

As described above, the application program A 117 sequentially decrypts the encrypted keys stored in the nodes of the key database A 120, namely from the root to the leaf 138 corresponding to the data B, by using the key management software 116 and the key database A120 (S201).

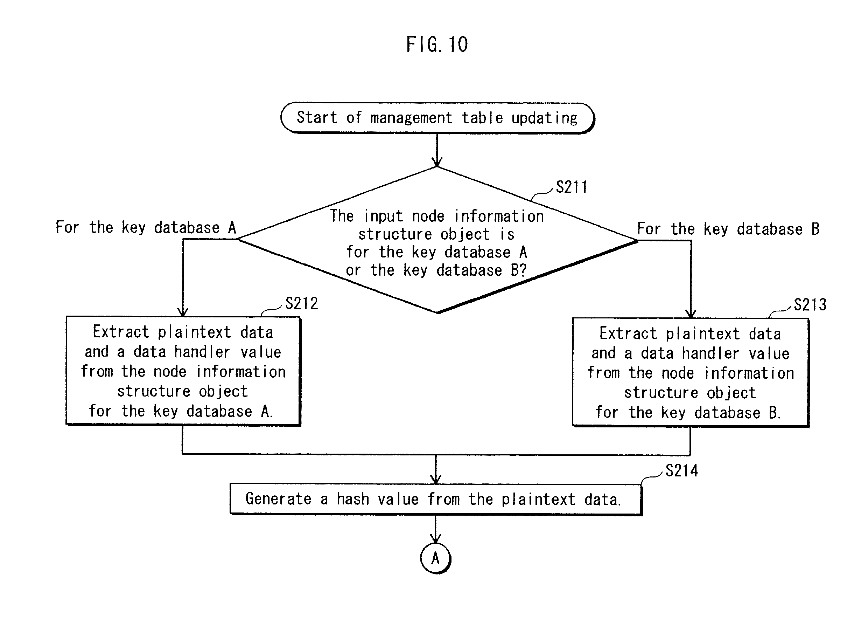

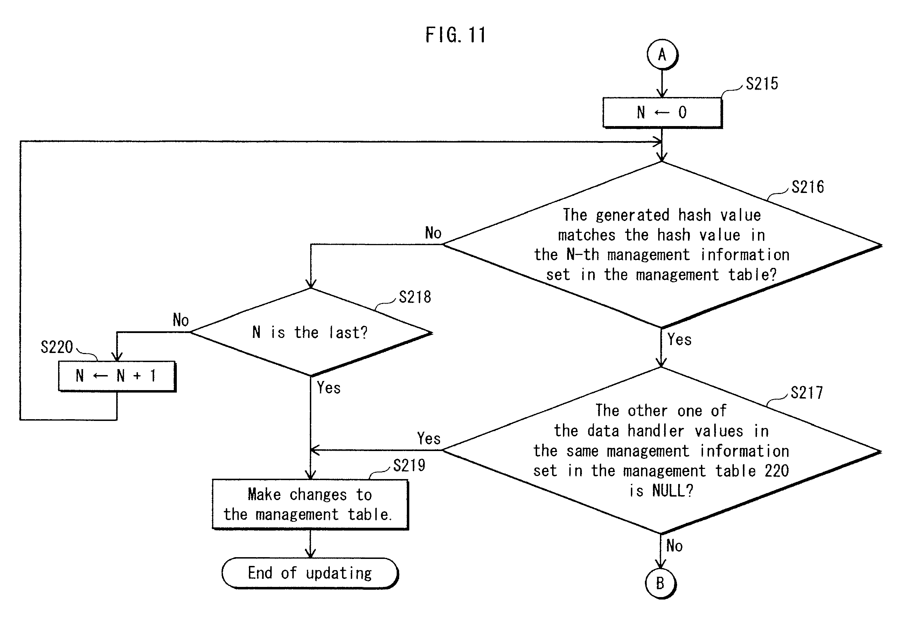

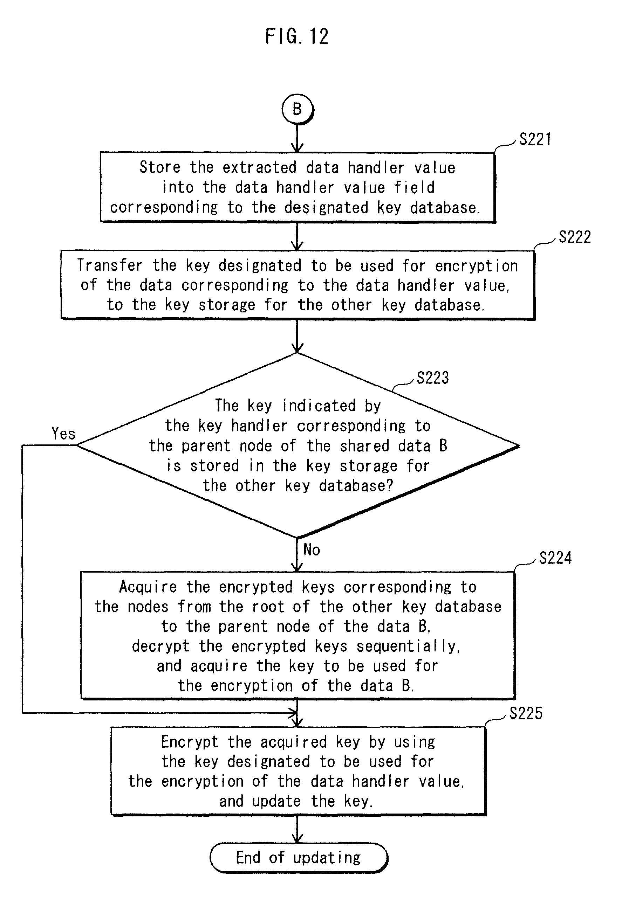

Next, the application program A117 requests the key management software 116 to encrypt the updated data B by using the key F acquired in Step S201. The key management software 116 updates the management table 220 (S202). This step is described later in detail, with reference to FIGs.10-12.

Next, the key management software 116 determines whether the data to be encrypted (i.e. the data B before the updating) is shared between the key database A120 and the key database B121, by using the management table 220 (S203). The determination is made in the following manner. The key management software 116 causes the hash value generation unit 203 to generate a hash value of the data before the updating, and causes the hash value determination unit 204 to determine whether the management table 220 includes any management information set that contains the same hash value as the generated hash value. When the hash value determination unit 204 determines affirmatively, the handler value determination unit makes the determination in the following manner.

The handler value determination unit 205 determines that the data is shared between the first cryptographic system and the second cryptographic system, when, between the first key handler value and the second key handler value contained in the management information set, the key handler value of the cryptographic system other than the designated cryptographic system is not NULL. If this is the case, the processing moves to Step S204.

On the other hand, the handler value determination unit 205 determines that the data is not shared between the first cryptographic system and the second cryptographic system, when, between the first key handler value and the second key handler value contained in the management information set, the key handler value of the cryptographic system other than the designated cryptographic system is NULL. If this is the case, the processing moves to Step S206.

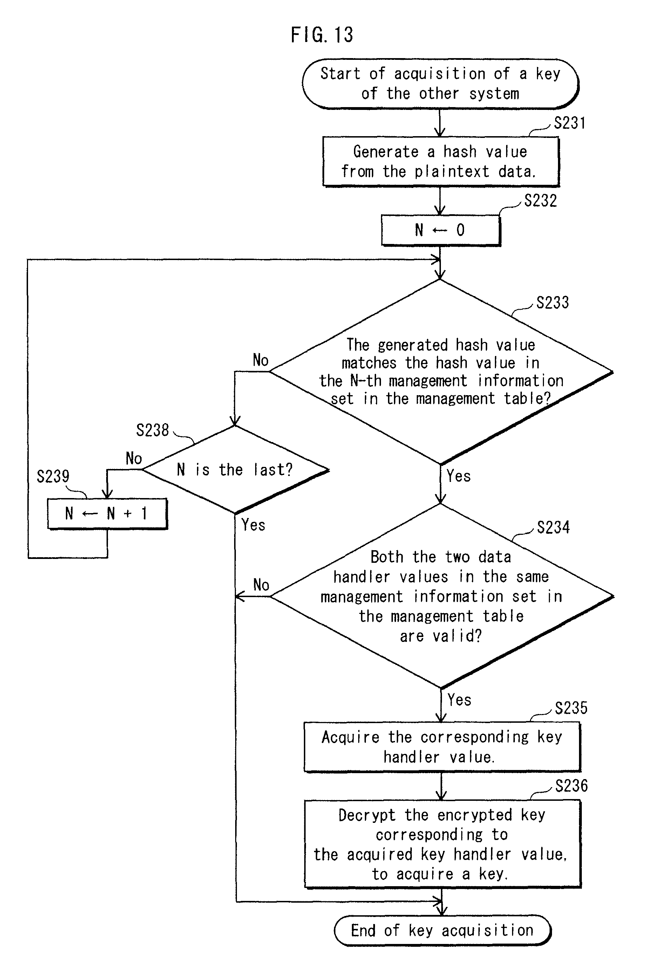

Next, the key management software 116 acquires the key used for the synchronization of the data B. That is, the key management software 116 acquires the key of the other system (S204). This step is described later in detail, with reference to FIG. 13.

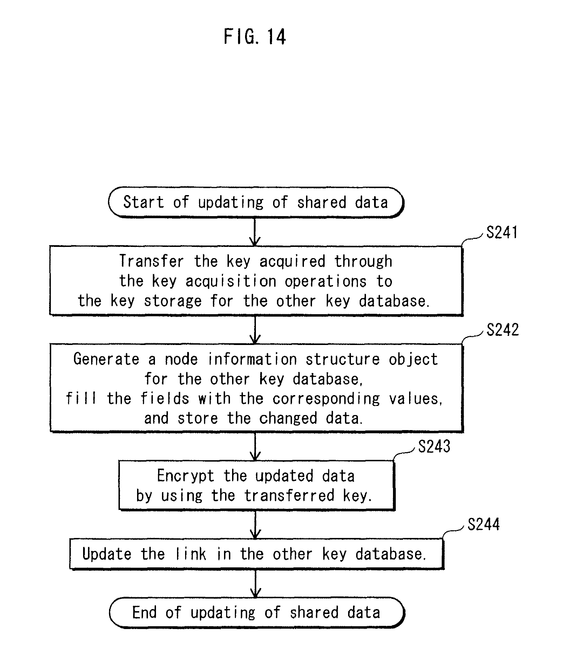

Next, the key management software 116 updates the shared data in the other system, in synchronization (S205). This step is described later in detail, with reference to FIG. 14.

Next, in the manner as described above, the key management software 116 encrypts the updated data B therein, and overwrites the encrypted updated data B into the encrypted-data substorage 122a (Step S206). Then, the processing finishes.

It should be noted here that although it is explained above that the application program A 117 updates the shared data, the application program B118 may update the shared data in the same manner.

The determination results in Step S203 and the procedures following the determination can be summarized as follows. It is assumed here that the first key handler value is the key handler value of the designated cryptographic system, and the second key handler value is the key handler value of the other cryptographic system.

(i) The case where both the first key handler value and the second key handler value are determined as not NULL in Step S203

If this is the case, both the first cryptographic system and the second cryptographic system have the target data.

The key management software 116 acquires the key of the encrypted data in the second cryptographic system, and encrypts the acquired key within the first cryptographic system. The encrypted key is stored into the first cryptographic system. The updated data is encrypted within the second cryptographic system to generate encrypted updated data, and the encrypted data is overwritten with the updated encrypted data. Furthermore, the updated data is encrypted within the first cryptographic system to generate encrypted updated data, and the encrypted data is overwritten with the updated encrypted data.

(ii) The case where the first key handler value is determined as NULL and the second key handler value is determined as not NULL in Step S203.

If this is the case, the first cryptographic system does not have the target data, and the second cryptographic system has the target data.

The key management software 116 acquires the key of the encrypted data in the second cryptographic system, and encrypts the acquired key within the first cryptographic system. The encrypted key is stored into the first cryptographic system. The updated data is encrypted within the second cryptographic system to generate encrypted updated data, and the encrypted data is overwritten with the updated encrypted data. Furthermore, the updated data is encrypted within the first cryptographic system to generate encrypted updated data, and the encrypted data is written into the first cryptographic system.

(iii) The case where the first key handler value is determined as not NULL and the second key handler value is determined as NULL in Step S203.

If this is the case, the first cryptographic system has the target data, and the second cryptographic system does not have the target data.

The updated data is encrypted within the first cryptographic system to generate encrypted updated data, and the encrypted data is overwritten with the updated encrypted data.

No processing is performed in the second cryptographic system.

(iv) The case where the first key handler value is determined as NULL. and the second key handler value is also determined as NULL in Step S203.

If this is the case, the first cryptographic system does not have the target data, and the second cryptographic system does not have the target data, either.

The updated data is encrypted within the first cryptographic system to generate encrypted updated data, and the encrypted updated data is written into the first cryptographic system.

In this case, the data is not updated, but newly written into the first cryptographic system.

No processing is performed in the second cryptographic system.

### (3) Updating of Management Table 220

This section describes the updating of the management table 220, with reference to the flowcharts shown in FIGs. 10-12. Note that the explanation given here shows the details of Step S202 in FIG. 9.

The database determination unit 201 determines whether the input data (i.e. node information structure object) is for the key database A or the key database B by using the command input from the application program (i.e. the application program A 117 or the application program B118) (S211). In the case of using the keys and data sets managed under the key database A120, the application program uses commands for the key database A120 and the node information structure object 150. In the case of using the keys and data sets managed under the key database B121, the application program uses commands for the key database B121 and the node information structure object 160. Hence, the database determination unit 201 determines whether the input data, namely the node information structure object, is for the key database A 120 or the key database B121 by referring to the command input from the application program and determining whether the node information structure object is the node information structure object 150 or the node information structure object 160.

In the case where the input data is for the key database A 120, the plaintext data extraction unit 202 extracts plaintext data and a data handler value from the node information structure object 150 (S212). In the case where the input data is for the key database B121, the plaintext data extraction unit 202 extracts a data handler value from the node information structure object 160, and extracts plaintext data from the location determined by the link destination information of the node information structure object 160 (S213).

Next, hash value generation unit 203 generates a hash value from the extracted plaintext data (S214).

Next, the hash value determination unit 204 determines whether the hash value generated in Step S214 matches any of the hash values of the plaintext data contained in the management information sets stored in the management table 220. The following show the details.

The hash value determination unit 204 substitutes an initial value 0 into a variable N which shows the entry number of a management information set in the management table 220 (S215). The entry number is an identifier that uniquely identifies one of the management information sets contained in the management table 220.

Next, the hash value determination unit 204 determines whether the hash value in the N^{th} management information set matches the hash value generated in Step S214 (S216). In the case of a mismatch (NO in S216), when N is not the entry number of the last management information set in the management table 220 (NO in S218), the hash value determination unit 204 increments N by one (S220), and returns to Step S216.

When N is the entry number of the last management information set in the management table 220 (YES in S218), the processing moves to S219.

When the hash value in the N^{th} management information set matches the hash value generated in Step S214 (YES in S216), the handler value determination unit 205 determines whether the other one of the data handler values in the same management information set in the management table 220 is NULL or not (S217). Specifically, the handler value determination unit 205 refers to the management information set that stores therein the value that matches the hash value generated in Step S214, and refers to the first and second data handler values in the management information set. If one of the first and second data handler values that is for the key database not designated by the application program is null (i.e. empty), this means that the key database does not share the data as to which the encryption is requested by another application program, with the other key database. If one of the handler values that is for the key database not designated by the application program is not null (i.e. not empty), this means that the key database shares the data as to which the encryption is requested by another application program with the other key database. Thus, when one of the data handler values is NULL (i.e. empty) (YES in S217), the processing moves to Step S219. When one of the data handler values is not NULL (i.e. not empty) (NO in S217), the processing moves to Step S221.

When the hash value determination unit 204 determines that the hash value generated in Step S214 is not contained in the management table (YES in S218) and when it determines that one of the data handler values in the same management information set in the management table 220 is NULL (YES in S217), the management table update unit 208 adds a new management information set to the management table 220, and stores the hash value generated in Step S214 and the data handler value of the node information structure object into their respective fields (S219). Then, the processing finishes.

Next, the management table update unit 208 stores the data handler value extracted from the node information structure object received from the application program, into the field in the management information set in the management table 220 for the data handler value corresponding to the designated key database (S221). For example, when the application program A117 requests for encryption processing by using the key database A120, the data handler value extracted from the node information structure object received from the application program A117 is stored into the field for the data handler value to the key database A120, in the management information set in the management table 220.

Next, the key acquisition unit 206 transfers, to the key storage for the other key database, the key that is indicated by the node information structure object received from the application program and is designated to be used for the encryption of the data corresponding to the data handler value (S222). For example, when the designation is made by the application program A117, the designated key is transferred to the key storage 125 for the key database B. When the designation is made by the application program B118, the designated key is transferred to the key storage 126 for the key database A.

Next, the key acquisition unit 206 determines whether the key indicated by the key handler corresponding to the parent node of the data B is stored in the key storage for the key database that is different from the designated key database (S223). For example, when the designation is made by the application program A117, the key acquisition unit 206 determines whether the key indicated by the key handler corresponding to the parent node of the data B is stored in the key storage 125 for the key database B. When the designation is made by the application program B 118, the key acquisition unit 206 determines whether the key indicated by the key handler corresponding to the parent node of the data B has been loaded onto the key storage 126 for the key database A.

If the corresponding key has been loaded (YES in S223), it is unnecessary to reload the key thereon, and thus the processing moves to Step S225. If the corresponding key has not been loaded (NO in S223), the key acquisition unit 206 acquires the encrypted keys corresponding to the nodes from the root of the other key database to the parent node of the data B, decrypts the encrypted keys sequentially, and acquires the key to be used for the encryption of the data B (S224).

Next, the key acquisition unit 206 encrypts the key acquired for the encryption of the data B by using the key designated to be used for the encryption of the data corresponding to the data handler value, namely the key transferred in Step S222. When the designated key database is the key database A, the key writing unit 209 writes the encrypted key into the field for a key of the node information structure object 150 corresponding to the data B, thereby updating the key database A. When the designated key database is the key database B, the key writing unit 209 writes the information indicating the location where the encrypted key has been stored, into the link destination information field in the node information structure object 160 corresponding to the data B, thereby updating the key database B (S225). Then, the processing finishes.

Through the procedures described above, the data B and the keys of the key handlers corresponding to the nodes of the data B are placed under the management according to the same nodes (leaves).

### (4) Operations for Acquisition of Key

The following explains the operations for acquisition of the key, with reference to the flowchart shown in FIG. 13. Note that the explanation given here shows the details of Step S204 in FIG. 9

The hash value generation unit 203 generates a hash value from the extracted plaintext data (S231).

Next, the hash value determination unit 204 determines whether the hash value generated in Step S231 matches any of the hash values of the plaintext data contained in the management information sets stored in the management table 220. The following show the details.

The hash value determination unit 204 substitutes an initial value 0 into a variable N which shows the entry number of a management information set in the management table 220 (S232). Next, the hash value determination unit 204 determines whether the hash value in the N^{th} management information set matches the hash value generated in Step S231 (S233). In the case of a mismatch (NO in S233), when N is not the entry number of the last management information set in the management table 220 (NO in S238), the hash value determination unit 204 increments N by one (S239), and returns to Step S233.

When N is the entry number of the last management information set in the management table 220 (YES in S238), the processing finishes.

In the case of a match (YES in S233), the handler value determination unit 205 refers to the management information set that stores therein the value that matches the hash value generated in Step S231, and refers to the first and second data handler values in the management information set. In other words, the handler value determination unit 205 refers to the data handler value of a leaf of the key database A and the data handler value of a leaf of the key database B. If both the first and second data handler values are not NULL (i.e. empty), this means that the key database shares the data as to which the encryption is requested by the application program, with the other key database. If at least one of the first and second data handler values is null (i.e. empty), this means that the key database does not share the data as to which the encryption is requested by the application program, with the other key database. Thus, when at least one of the first and second data handler values is NULL (i.e. empty) (NO in Step S234), the processing finishes.

When both the first and second data handler values are not NULL (i.e. not empty) (YES in S234), the handler value determination unit 205 acquires the key handler value corresponding to the designated key management database, from the management information set in the management table 220 (S235).

Next, the key acquisition unit 206 acquires the encrypted key corresponding to the key handler value acquired in Step S235, decrypts the encrypted key by using the cryptographic processing unit 114, and loads the key onto the key storage 126 for the key database A in the cryptographic processing unit 114 (S236). The key used for the decryption performed in Step S236 is the same as the key used for the encryption of the shared data. Thus, the key has loaded on the cryptographic processing unit 114 at Step S236.

Then, the processing finishes.

### (5) Operations for Updating Shared Data

The following explains the operations for updating of the shared data, with reference to the flowchart shown in FIG. 14. Note that the explanation given here shows the details of Step S205 in FIG. 9

The data access unit 1 19 transfers the key acquired through the operations for the acquisition of the key, which are shown in FIG. 13, to the key storage for the other key database (S241).

Next, the data access unit 119 generates a node information structure object for the other key database, fills the fields of the node information structure object with corresponding values, and stores the changed data into the other key database (S242).

Next, the key cryptographic engine 124 encrypts the updated data by using the key transferred in Step S241, in response to the instruction from the data access unit 119.

Then, the key cryptographic engine 124 refers to the hash value of the shared data, extracts the corresponding management information set in the management table 220, and specifies the node of the shared data by referring to the data handler value of the other key database, contained in the extracted management information set. Next, the key cryptographic engine 124 updates the link by overwriting the encrypted data of the node managed under the other key database, with the encrypted updated data (S244). Then, the processing finishes.

Note that the hash value of the shared data may be the value already generated in Step S212 or S213, or may be newly generated. As another updating method, if there is location information for managing the locations of the key database and the nodes of the encrypted data, the location information may be updated so as to indicate the new node information structure object.

With the stated procedures, the information processing apparatus 10 pertaining to this Embodiment directly decrypts a key stored in the key database B, within the cryptographic system including the key database A. This saves the steps for acquiring the keys all through the tree structure of the key database B, and expedites the synchronization of the updated data.

Also, with the stated structure, the information processing apparatus 10 pertaining to this Embodiment directly decrypts a key stored in the key database A, within the cryptographic system including the key database B. This saves the steps for acquiring the keys all through the tree structure of the key database A, and expedites the synchronization of the updated data.

Moreover, when updating shared data, the information processing apparatus pertaining to this Embodiment specifies a shared data node and updates the node. Thus, when updating the shared data, the data sets of other nodes are prevented from being damaged erroneously. Also, since the information processing apparatus overwrites the shared data in the specified location, it is capable of surely discarding the old shared data.

### 2. Embodiment 2

A cryptographic processing unit 260 provided in an information processing apparatus 10 as another embodiment pertaining to the present invention is described below.

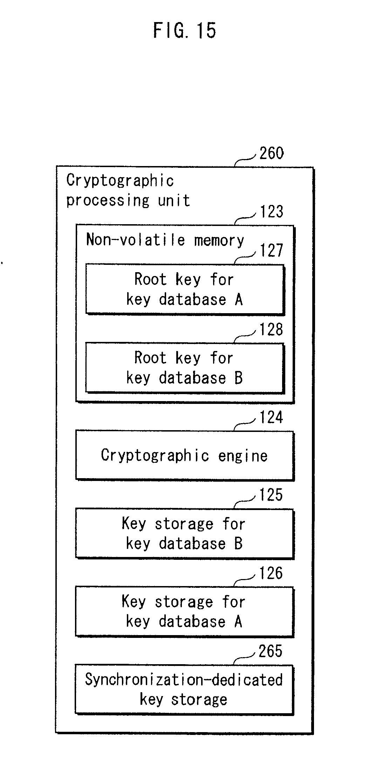

The information processing apparatus 10 pertaining to Embodiment 2 is provided with a cryptographic processing unit 260 as shown in FIG. 15, instead of the cryptographic processing unit 1 14 provided in the information processing apparatus 10 pertaining to Embodiment 1. The cryptographic processing 260 has a similar structure as the cryptographic processing unit 114 pertaining to Embodiment 1. The following mainly explains the differences from the cryptographic processing unit 114.

The cryptographic processing unit 260 includes a synchronization-dedicated key storage 265, in addition to the non-volatile memory 123, the cryptographic engine 124, the key storage 125 for the key database B and the key storage 126 for the key database A that are provided in the cryptographic processing unit 114 pertaining to Embodiment 1.

According to Embodiment 2, in Steps S222 and S241 pertaining to Embodiment 1, the key is transferred to the synchronization-dedicated key storage 265 and is then used, instead of being transferred to the key storage 125 for the key database B or the key storage 126 for the key database A.

In other words, the key acquisition unit 206 transfers, to the synchronization-dedicated key storage 265, the key that is indicated by the node information structure object received from the application program and is designated to be used for the encryption of the data corresponding to the data handler value (S222).

The data access unit 119 transfers the key acquired through the operations for the acquisition of the key, which are shown in FIG. 13, to the synchronization-dedicated key storage 265 (S241).

In this way, due to the synchronization-dedicated key storage 265, it is unnecessary to use the key storage 126 for the key database A or the key storage 125 for the key database B pertaining to Embodiment 1, in the data synchronization processing. Thus, it is also unnecessary to discard the key stored in the key storage 126 for the key database A or the key storage 125 for the key database B, in the data synchronization processing.

### 3. Embodiment 3

A cryptographic processing unit 270 provided in an information processing apparatus 10 as another embodiment pertaining to the present invention is described below.

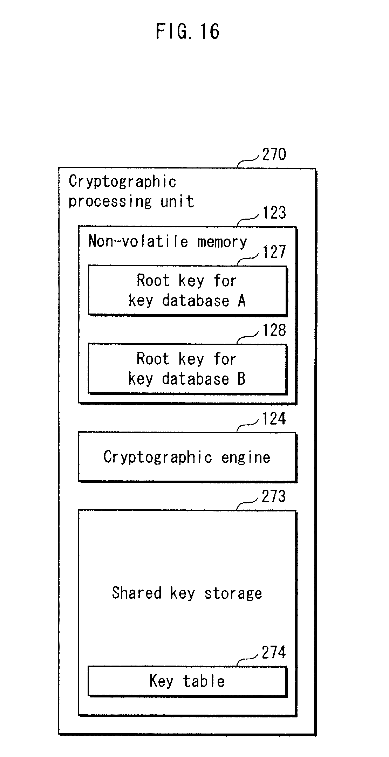

The information processing apparatus 10 pertaining to Embodiment 3 is provided with a cryptographic processing unit 270 as shown in FIG. 16, instead of the cryptographic processing unit 114 provided in the information processing apparatus 10 pertaining to Embodiment 1. The cryptographic processing 270 has a similar structure as the cryptographic processing unit 114 pertaining to Embodiment 1. The following mainly explains the differences from the cryptographic processing unit 114.

The cryptographic processing unit 270 includes a shared key storage 273, in addition to the non-volatile memory 123 and the cryptographic engine 124 that are provided in the cryptographic processing unit 114 pertaining to Embodiment 1. The cryptographic processing unit 270 is not provided with the key storage 126 for the key database A or the key storage 125 for the key database B. The shared cryptographic processing unit 273 is equivalent to the combination of the key storage 126 for the key database A and the key storage 125 for the key database B.

The shared key storage 273 stores therein a key table 274 as shown in FIG. 16.

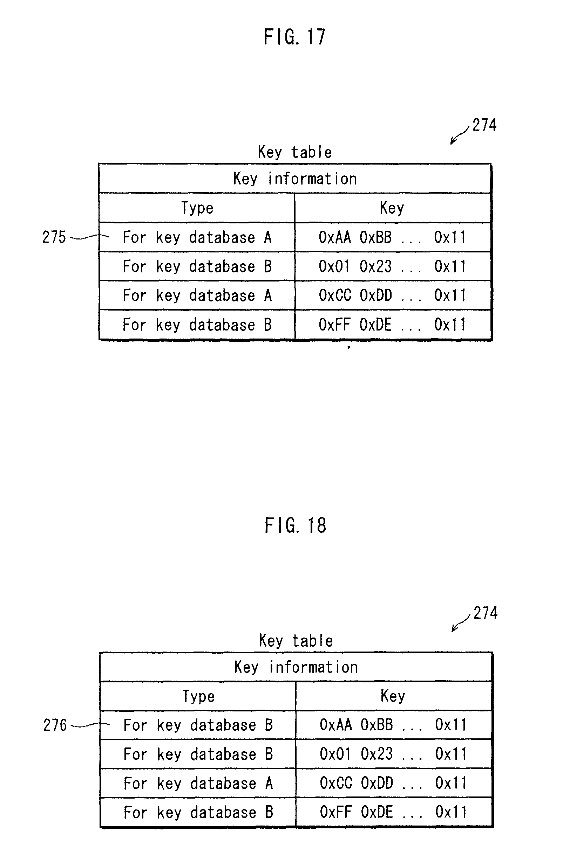

The key table 274 includes a plurality of key information sets as shown in FIG. 17. Each key information set is composed of a type and a key. The type indicates the key database to be used. That is, the type shows whether the key is for the key database A or the key database B. The key field stores therein the key described above.

In Step S222 and S241 pertaining to Embodiment 1, the information processing apparatus 10 pertaining to Embodiment 3 changes the type of the database to be used, in the key table 274, instead of transferring the key.

The following explains example operations for changing the database type, with reference to FIG. 17 and FIG. 18. In the example shown in FIG. 17, it is assumed that the shared data in the key database B has been encrypted with the key for the key database B, namely "0xAA 0xBB...0x11".

First, the key for the key database B, namely "0xAA 0xBB...0x11", which is under the management of the key database A, is loaded onto the shared key storage 273, by the method as described in the explanation of Embodiment 1. At this point, the key for the key database B, namely "0xAA 0xBB...0x11", is under the management of the key database A. Thus, the database type shown in the field 275 in the key table 274 shown in FIG. 17 is "for the database A".

Next, the key management software 116 instructs the cryptographic processing unit 270 to change the loaded key "0xAA 0xBB...0x11" to be used for the key database B. The cryptographic processing unit 270 changes the loaded key "0xAA 0xBB...0x11" in the key table 274 in the shared key storage 273 to be used for the key database B (FIG. 18). As a result, the field 276 in the data base type in the key table 274 shown in FIG. 18 is changed to indicate "for the database B".

Next, the key management software 116 updates (i.e. synchronizes) the shared data by the method as explained for the Embodiment 1.

After that, the key management software 116 instructs the cryptographic processing unit 270 to change the loaded key "0xAA 0xBB...0x11" to be used for the key database B. The cryptographic processing unit 270 changes the loaded key "0xAA 0xBB...0x11" in the key table 274 in the shared key storage 273 to be used for the key database A (FIG. 17). As a result, the field 275 in the data base type in the key table 274 shown in FIG. 17 is changed to indicate "for the database A".

As explained above, with the shared key storage 273 and with use of the key table 274, it is unnecessary to transfer the key in the data synchronization processing. Also, since the key database A and the key database B share the key, only a small capacity is required for storing the key.

Note that it is acceptable that the key database type is not changed after the updating (i.e. synchronization) of the shared data.

Also, the cryptographic processing unit 270 may discard the key that has been used, after the updating (i.e. synchronization) of the shared data.

### 4. Other Modifications

(1) In the Embodiments described above, the key database A 120 and the key database B121 are stored in the first storage 112 as a semiconductor memory. However, they may be stored in the second storage unit 113 composed of a hard disk unit.

(2) In the Embodiments above, the cryptographic processing unit 114 is realized a hardware apparatus. However, the cryptographic processing unit 114 may be realized as software. Also, the software that realizes the cryptographic processing 1 14 may be executed in a secure software execution environment.

(3) In Step S222 and S241 according to the Embodiments above, the keys to be discarded from the key each storage may be encrypted with the root key after the key transfer and temporarily stored in the non-volatile memory in the cryptographic processing unit, and then may be loaded onto the volatile memory inside the cryptographic processing unit again, after the completion of the synchronization processing. Note that the cryptographic processing unit accepts no processing request during the synchronization processing, so that information, such as the location within each key storage, is not changed during the synchronization.

If this is the case, the cryptographic processing unit includes a control unit, a first key storage unit configured to store therein the first key for the first cryptographic system, a second key storage unit configured to store therein the second key for the second cryptographic system, and a cryptographic engine unit configured to perform encryption by using the first key and the second key stored in the first key storage unit and the second key storage unit, respectively. When the first key storage unit lacks enough empty space for storing the first key, the control unit causes the cryptographic engine unit to encrypt and externally save a key that has been stored in the first key storage unit to create an empty area, writes the first key into the empty area, and after encryption with use of the first key has been completed within the first cryptographic system, causes the cryptographic processing unit to decrypt the saved key that has been encrypted and to overwrite the first key with the saved key.

(4) In each of the Embodiments above, each key storage may be managed in units of blocks each having a fixed size, and store the key by using a plurality of blocks depending on the length of the key. If this is the case, a block management table for managing blocks may be used to manage the each key storage.

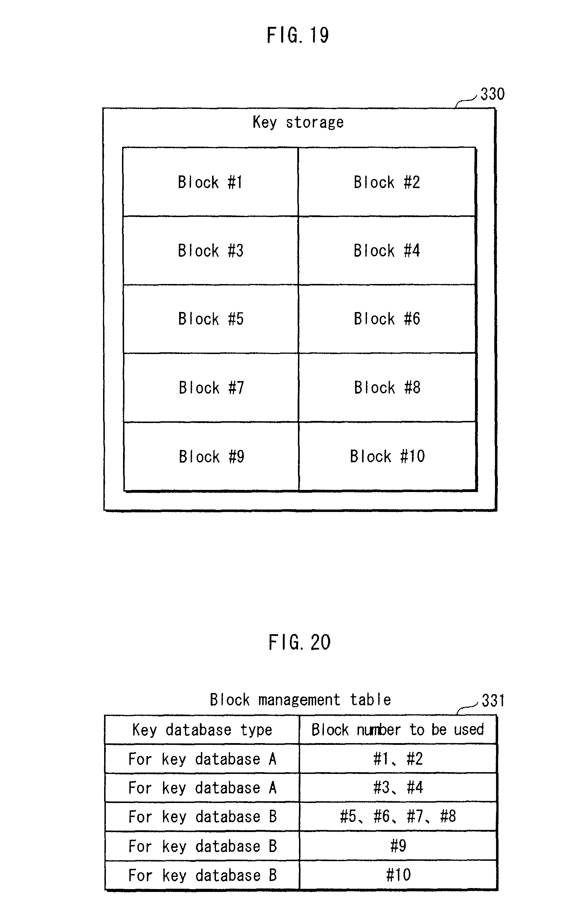

FIG. 19 shows an example case where each key storage is managed in units of blocks each having a fixed size. The key storage 330 shown in FIG. 19 consists of ten blocks each having a fixed size. The keys are managed in units of blocks.

FIG. 20 shows an example block management table in which each key storage is managed in units of blocks each having a fixed size. The management table 331 shown in FIG. 20 shows which blocks in the key storage 330 are used for storing the key of each database. The block management table 331 includes a plurality of pairs consisting of a key database type and a block number to be used, and shows the correspondence between the database type and the block number to be used.

The block management table 331 shows as follows: concatenated data generated by concatenating two data sets stored in the block #1 and the block #2 in the key storage 330 is a single key for the key database A;concatenated data generated by concatenating two data sets stored in the block #3 and the block #4 is a single key for the key database A;concatenated data generated by concatenating four data sets stored in the block #5, the block #6, the block #7 and the block #8 is a single key for the key database B; the data set stored in the block #9 is a single key for the key database B; and the data set stored in the block #10 is a single key for the key database B.

With this structure, it is possible to efficiently manage the areas for storing the keys in units of blocks.

As described above, the information processing apparatus includes a key storage unit (shown in FIG. 19) configured to store therein a key decrypted within the first cryptographic system, in association with first type information indicating that the key is for use within the first cryptographic system, and to store a key decrypted within the second cryptographic system, in association with second type information indicating that the key is for use within the second cryptographic system.

Within the first cryptographic system, the cryptographic processing unit performs decryption by using the key associated with the first type information, and within the second cryptographic system, the cryptographic processing unit performs decryption by using the key associated with the second type information.

The information processing apparatus further includes a control unit configured to cause the cryptographic processing unit to encrypt, within the second cryptographic system, the target data that has been updated, by replacing the first type information which has been associated with the key stored in the key storage unit after the decryption performed within the first cryptographic system, with the second type information.

Also, the key storage unit includes a plurality of storage blocks each having a predetermined capacity, and stores therein block information that indicates, for each key stored therein, the corresponding one of the storage blocks in which the key is stored.

(5) In the Embodiments above, each management information set in the management table may be held after being encrypted by using the key of the leaf corresponding to the management information set. If this is the case, the management table is to be divided for each management information set, and each management information set is to be managed by using the leaves.

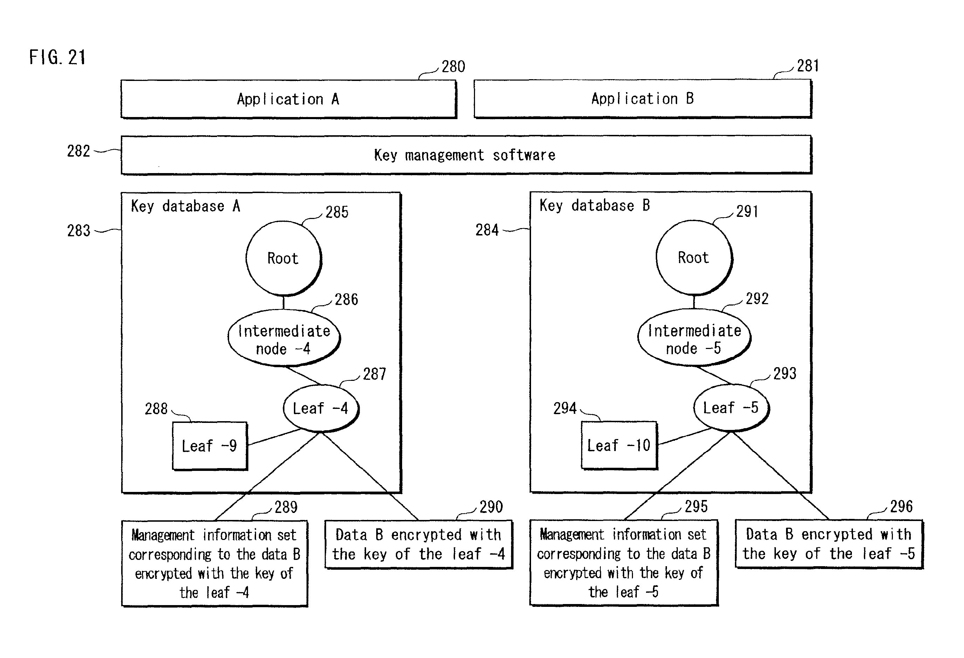

FIG. 21 shows an example case where the management table is divided for each management information set and managed by using the leaves. The application program A280, the application program B281, the key database A283 and the key database B284 are the same as the application program A 117, the application program B 118, the key database A 120 and the key database B121 of Embodiment 1, respectively. The key management software 282 performs the management by using the key database A283 and the key database B284, in the manner as is described later.

Each management information set in the management table is encrypted with a key of the node assigned so as to be used for encrypting the data corresponding to the management information set. In the example shown in FIG. 21, regarding the shared data B, the management information set (289) corresponding to the data B is stored after being encrypted by using the key of the node 287 (i.e. leaf -4), which is the key assigned in the key database A283 so as to be used for the encrypt of the data B. Similarly, regarding the shared data B, the management information set (295) corresponding to the data B is stored after being encrypted by using the key of the node 293 (i.e. leaf -5), which is the key assigned in the key database B284 so as to be used for the encrypt of the data B

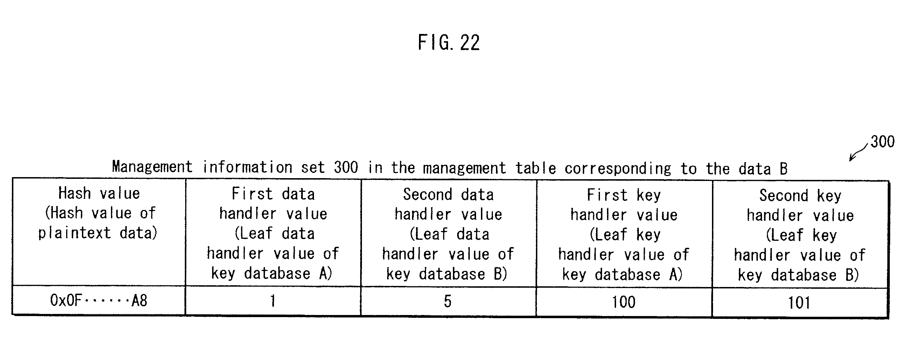

FIG. 22 shows a management information set 300 in the management table corresponding to the data B shown in FIG. 21. The management information set 300 contains the same elements as each management information set of the management table 220 shown in FIG. 6.

Every time the shared data is updated, the key of the leaf for encrypting the shared data is searched for. The management table records the location of the shared data encrypted with the key of the leaf managed under the other key database. Thus, it is possible to simplify the search for the location of the shared data to be updated in the synchronization processing, by associating the key of such a leaf with the management table.

As described above, the management table contains the summary value of the encrypted data and each handler value (i.e. location information) in association with each other. The determination unit calculates the summary value from the encrypted data stored in the encrypted-data storage, and determines whether the handler value (i.e. location information) corresponding to the summary value is stored in the management table.

(6) In each of the Embodiments described above, each management information set of the management table may be held after being encrypted by using the root key stored in the cryptographic processing unit.

(7) In the Embodiments above, the key management software updates the management table when the application program encrypts the data. However, the key management software may update the management table at another point in time.

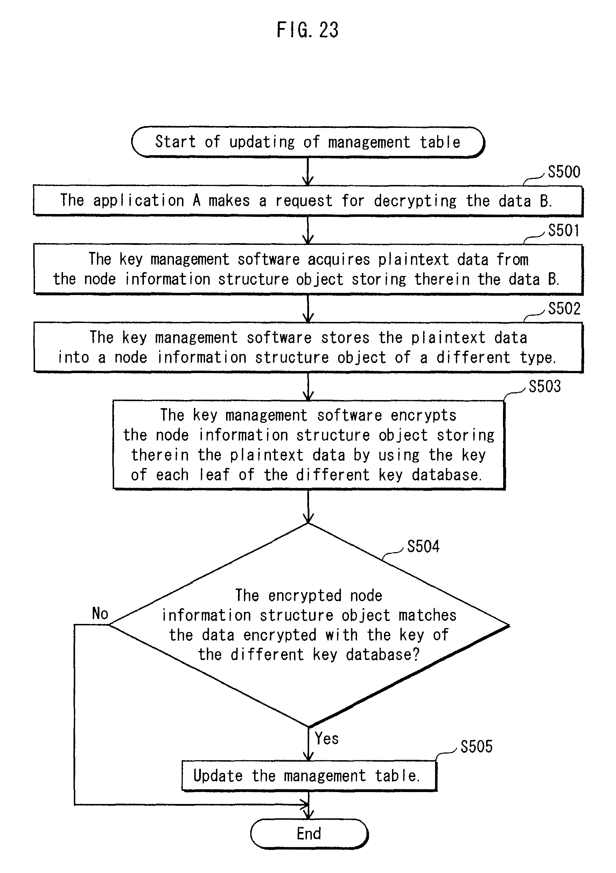

FIG. 23 is a flowchart showing the updating of the management table performed by the key management software when the application program (i.e. the application program A or the application program B) decrypts the data.

The application program (e.g. the application program A) requests the key management software to decrypt the data B (S500).

Next, the key management software acquires plaintext data from the node information structure object that stores the data B as to which the decryption is requested (S501).

The key management software stores the acquired plaintext data into the node information structure object of the key database that is different from the key database designated by the application program (S502).

The key management software instructs the cryptographic engine to encrypt the node information structure object from which the plaintext data is acquired and stored in Step S502, by using the keys of all the leaves of the key database that is different from the key database designated by the application program, and the cryptographic engine encrypts the node information structure object storing the plaintext data (S503).

The key management software determines whether the node information structure object, which has been encrypted in Step S503, matches the encrypted data managed under the key database that is different from the key database designated by the application program (S504). In the case of a match (YES in S504), the key management software determines that the data is the shared data, and updates the management table (S505) and finishes the updating of the management table.

In the case of a mismatch (NO in S504), the key management software finishes the updating of the management table.

Note that the matching determination in Step S504 may be performed by using the hash value of the encrypted data. Also, the hash value of the encrypted data may be stored in the field for the hash value of the plaintext data in the management table.

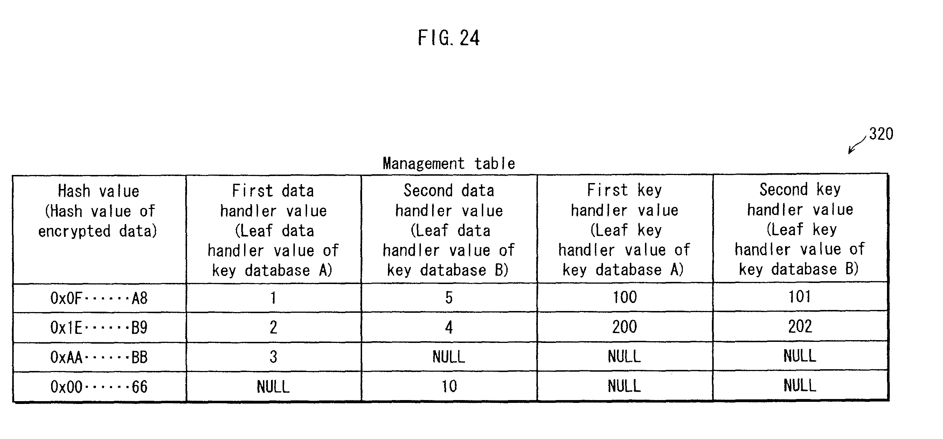

FIG. 24 shows an example of the management table 320 for the case where the hash value of the encrypted data is used for specifying the shared data. The difference between the management table 320 in FIG. 24 and the management table 220 in FIG. 6 is that the hash value of the encrypted data has been generated in the management table 320 whereas the hash value of the plaintext data has been generated in the management table 220. The other fields of the management tables are the same.

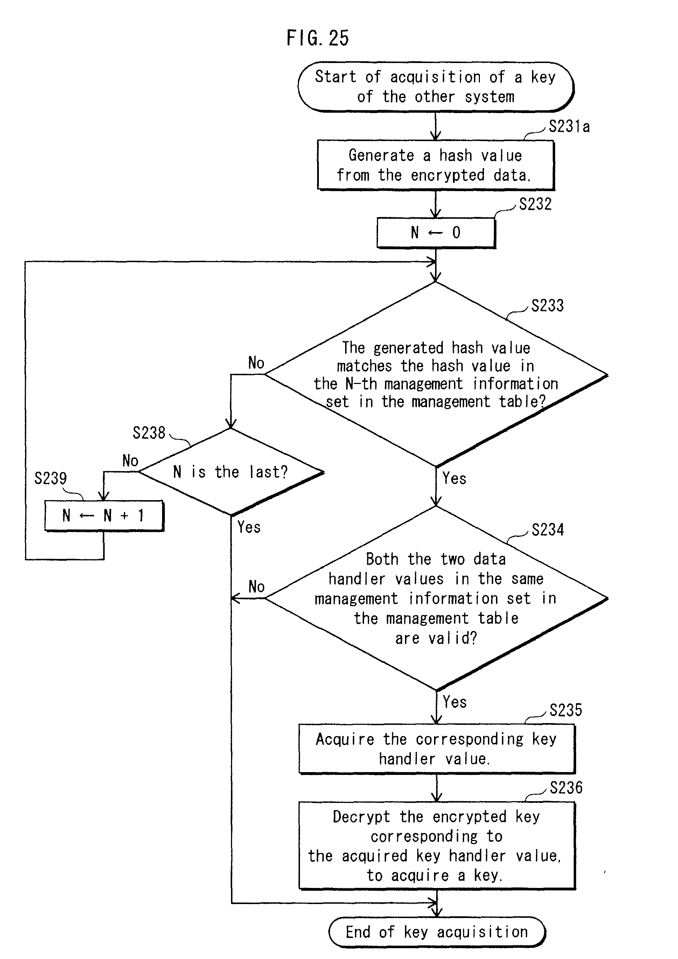

FIG. 25 shows a flowchart showing the procedures for specifying the shared data by using the management table 320 shown in FIG. 24 and acquiring the key for the data to be synchronized.

The difference between the flowchart shown in FIG. 25 and the flowchart for acquiring the key (FIG. 13) as described for Embodiment 1 is as follows: In the key acquisition pertaining to Embodiment 1, the hash value is generated from the plaintext data in Step S231, whereas, in the flowchart shown in FIG. 25, the hash value is generated from the encrypted data in Step S231a.

Step S232 and the subsequent steps in FIG. 25 are the same as Step S232 and the subsequent steps in FIG. 13.

(8) In each of the Embodiments described above, the key management software and the management table may be executed or managed in a secure software execution environment. As a technology for realizing a secure software execution environment, Secure Boot may be used. Secure boot is a technology for starting up only legitimate software selectively. Also, another alternative method may be adopted for establishing a secure software execution environment.

(9) In each of the Embodiments described above, ECC or NTRU may be designated with the cryptosystem identifier contained in the node information structure object. Moreover, as the key length contained in the node information structure object, predetermined definition information may be used for specifying the key length, instead of the bit length of the key. Also, cryptographic engine may realize cryptographic processing according to ECC or NTRU.

(10) In each of the Embodiments described above, the field for the key handler value and the field for the data handler value are realized as separate fields in the node information structure object. However, a single field may be used for realizing them.

For example, a same number may be used for indicating the locations of the corresponding key and data, and if this is the case, only a single field for storing the number may be provided in the node information structure object. The number is, for example, an identifier for identifying a node in the tree structure of the key database.

If this is the case, an area is secured in each key database, and a pair of the key handler value and the data handler value is stored in this area. In this area, the location of the pair is identified with the above-mentioned number.

Also, if this is the case, in each key database, and a key handler value area may be secured, and the key handler value may be stored in this area. In this key handler value area, the location of the key handler value is identified with the above-mentioned number. Also, in each key database, and a data handler value area may be secured, and the data handler value may be stored in this area. In this data handler value area, the location of the data handler value is identified with the above-mentioned number.

(11) In each of the Embodiments described above, the hash value is generated by SHA-1 algorithm. However, another algorithm may be adopted. For example, SHA-2 (SHA-224, SHA-256, SHA-384, SHA-512) algorithm or MD5 (Message Digest 5) algorithm may be adopted.

(12) In each of the Embodiments above, every time the shared data under the management of one of the cryptographic systems is updated, the information processing apparatus updates the shared data under the management of the other cryptographic system. However, the present invention is not limited to this. The information processing apparatus may update the shared data under the management of the other cryptographic system when receiving an instruction for synchronization of the shared data. With such an operation, the information processing apparatus updates the shared data only when the other cryptographic system needs the shared data. This decreases the number of the updating operation to be performed.

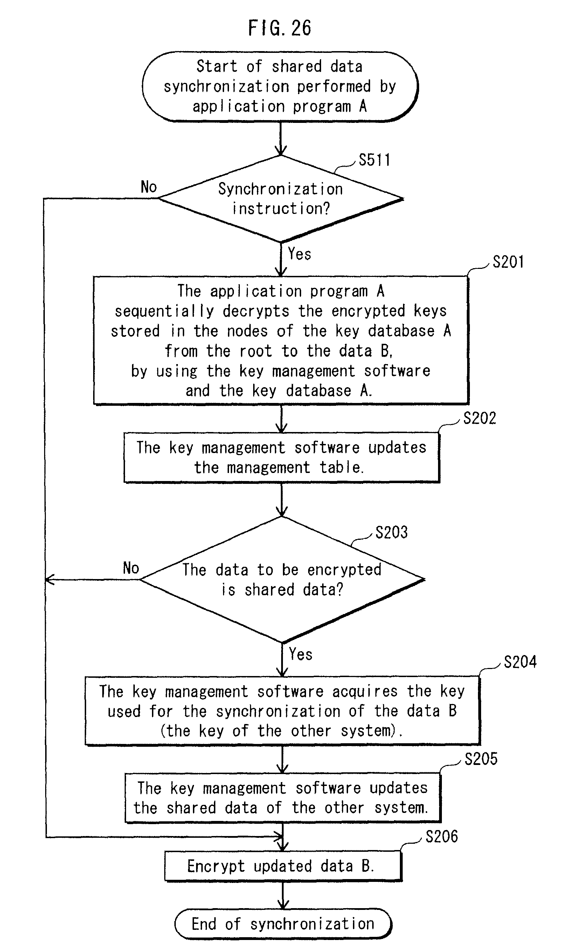

FIG. 26 is a flowchart showing procedures for updating the shared data under the management of the other cryptographic system, performed when synchronization of the shared data is requested.

The difference between the flowchart shown in FIG. 26 and the flowchart for data synchronization (FIG. 9) explained for Embodiment 1 is that in the flowchart shown in FIG. 26, Step S511 as a determination step of determining whether a synchronization instruction has been received or not is added.

In Step S511, if it is determined that a synchronization instruction has been received, the processing moves to Step S201. Step S201 and the subsequent steps are the same as Step S201 and the subsequent steps in FIG. 9.

In Step S511, if it is determined that no synchronization instruction has been received, the processing moves to Step S206, and the key management software 116 only the updated data B therein. Then the processing finishes.

In the determination of the synchronization instruction in Step S511 may be made based on the value of the flag that is under the management of the key management software, the number of cryptographic operations performed by the key management software, or the length of time the key management software is used.

The data access unit 119 overwrites the encrypted data stored in the encrypted-data substorage 122a, with the updated data encrypted within the first cryptographic system. After that, when receiving the synchronization instruction, the data access unit 119 overwrites the encrypted data stored in the encrypted-data substorage 122b, with the updated data encrypted within the second cryptographic system.

(13) Regarding each of the Embodiments above, although the details of the updating of the shared data performed by the information processing apparatus is not described, the updating may be performed after decrypting the encrypted shared data. For example, accumulative shared data that changes according to accumulation, such as information that shows the number of times the content is used can be placed under the management. The number of times is encrypted and stored in the first cryptographic system and the second cryptographic system. When the content is used in the first cryptographic system, the encrypted number is decrypted, and the obtained number is decreased by "1". Next, the number decreased by "1" is encrypted again. At this time point, the encrypted number stored in the second cryptographic system is overwritten with the new encrypted time.

Alternatively, an instruction to update the encrypted shared data may be provided from the outside. In other words, the updated data obtained by updating the shared data may be provided from the outside. If this is the case, the updated data is encrypted and held in the first cryptographic system, and the updated data is encrypted and held within the second cryptographic system as well.

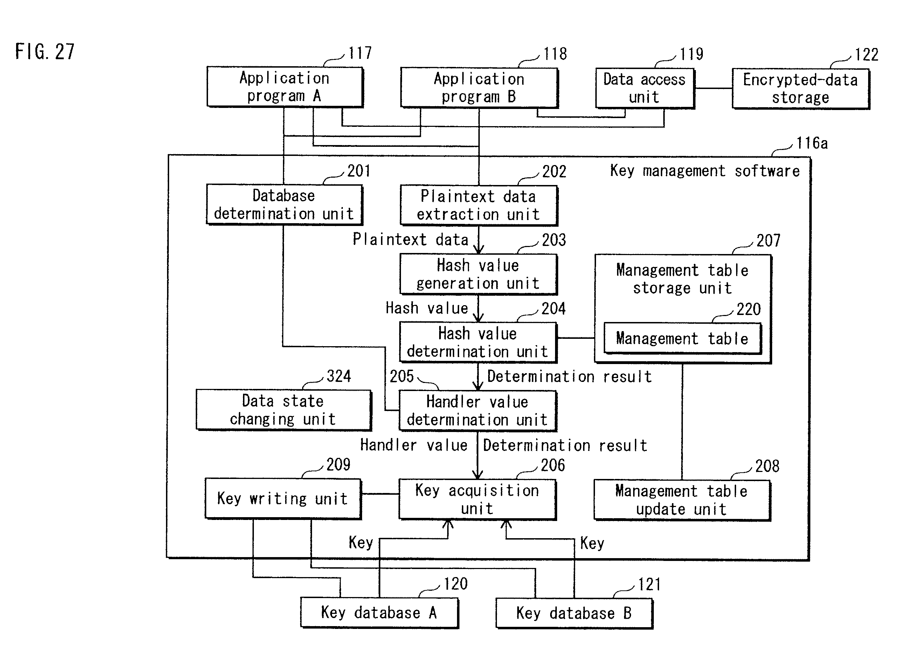

FIG. 27 shows a software structure of the information processing apparatus which is externally provided with an instruction to update the shared data that has been encrypted.

The application program A 117, the application program B 118, the key database key database A 120, the key database B121 and the encrypted-data storage 122 are the same as the application program A117, the application program B118, the key database A 120, the key database B121 and the encrypted-data storage 122 of the Embodiment 1, respectively.

As shown in FIG. 27, the key management software 116a includes a data state changing unit 324 in addition to the database determination unit 201, the plaintext data extraction unit 202, the hash value generation unit 203, the hash value determination unit 204, the handler value determination unit 205, the key acquisition unit 206, the management table storage unit 207, the management table update unit 208 and the key writing unit 209 that are provided in the key management software 116 pertaining to Embodiment 1.

The data state changing unit 324 manages and changes the state of the data stored in the encrypted-data storage 122.

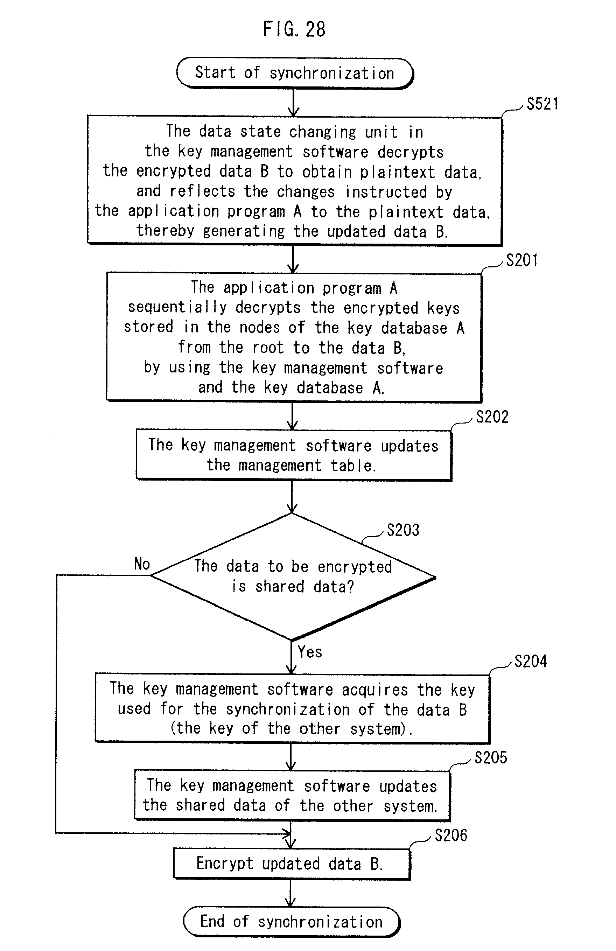

The following explains the data synchronization processing performed when the information processing apparatus is externally provided with an instruction to update the shared data that has been encrypted, with reference to the flowchart shown in FIG. 28.

The data state changing unit 324 in the key management software 116a decrypts the encrypted data B stored in the encrypted-data storage 122 to obtain plaintext data, and reflects the changes instructed by the application program A117 to the plaintext data, thereby generating the updated data B (S521).

For example, with respect to data B which has been encrypted with the key assigned to the leaf of the key database A120, when the application program A117 instructs the key management software 116a to decrease by one the data B as a cumulative change, the data state changing unit 324 decrypts the encrypted data B by using the key database A 120 to obtain the plaintext data, and decrease the plaintext data by one. Then, the data state changing unit 324 names the result of the decrease as the updated data B.

Step S201 and the subsequent steps are the same as Step S201 and the subsequent steps in FIG. 9.

Note, in Step S205 in FIG. 28, that the key management software 116a updates the encrypted data B in the other cryptographic system by using the encrypted updated data B.

(14) Part or all of the components included in each of the Embodiments described above may be implemented as software within the realm of possibility. Such a structure reduces the amount of hardware to be implemented on the integrated circuit, and thus further improves the degree of the integration.

(15) In each of the Embodiments described above, the application program A uses the key database A and the application program B uses the key database B. Also, the non-volatile memory 123 stores therein the root key for the key database A and the root key for the key database B, and the cryptographic processing unit includes the key storage for the key database A and the key storage for the key database B. However, the present invention is not limited to such a structure.

For example, the information processing apparatus may store n application programs (where n is a positive integer that is no less than 3) and *n* key databases, and the n application programs may correspond one-to-one to *n* key databases, and each application program uses the corresponding key database. The non-volatile memory 123 may store root keys for the n key databases, the cryptographic processing unit may include key storages for the *n* key databases, and the encrypted-data storage may include n encrypted-data substorages.

If this is the case, the information processing apparatus may be provided with n cryptographic systems each encrypting and storing data, and the information processing apparatus may include: a data acquisition unit configured to acquire target data that is to be encrypted within one of the cryptographic systems; a determination unit configured to determine whether the same data as the target data has been encrypted and stored in another one of the cryptographic systems; a key acquisition unit configured to acquire a key for the same data that has been encrypted and stored in the other one of the cryptographic systems, when the determination unit judges affirmatively; a key storage unit configured to store therein a key for use in the one of the cryptographic systems; and a key writing unit configured to write the key acquired by the key acquisition unit into the key storage unit, in association with the target data.

(16) The information processing apparatus pertaining to a first aspect of the present invention is an information processing apparatus in which a first system and a second system operate, the first system and the second system being independent systems each encrypting and managing data, the information processing apparatus comprising: a first data storage configured to store therein shared data that has been encrypted by using a first encryption key that is for use in the first system, the shared data being shared between the first system and the second system; a second data storage configured to store therein the shared data that has been encrypted by using a second encryption key that is for use in the second system; a first key storage configured to store, as a key for the first system, the second encryption key that has been encrypted by using the first encryption key; and a control unit configured to control the first system and the second system, wherein the control unit, when instructed to update the encrypted shared data stored in the first data storage, controls the first system to encrypt the shared data that has been updated, by using the first encryption key, and writes the encrypted shared data into the first data storage, and generate the second encryption key by decrypting the second encryption key that has been encrypted, by using a first decryption key that corresponds to the first encryption key, and controls the second system to update the encrypted shared data by encrypting the updated shared data by using the second encryption key generated in the first system and writing the encrypted updated shared data into the second data storage.

With the stated structure, the information processing apparatus pertaining to this aspect controls the first system to encrypt the shared data that has been updated, by using the first encryption key, and writes the encrypted shared data into the first data storage, and generate the second encryption key by decrypting the second encryption key that has been encrypted, by using a first decryption key that corresponds to the first encryption key, and encrypts the shared data that has been updated, by using the second encryption key generated within the first system, and writes the encrypted updated shared data into the second data storage. Thus, the information processing apparatus decrypts the second encryption key held in the second system, directly from the first system. This saves the steps for acquiring the second encryption key in the second system, and expedites the synchronization of the updated data.

In the information processing apparatus pertaining to a second aspect of the present invention, the control unit is further configured to control the second system to specify the location of the encrypted shared data in the second data storage, and to overwrite the encrypted shared data at the location with the shared data that has been updated by using the second encryption key.

With the stated structure, the information processing apparatus specifies the location of the encrypted shared data. Thus, when updating the encrypted shared data, the information processing apparatus can avoid destroying different data. Also, since the information processing apparatus overwrites the shared data in the specified location, it is capable of surely discarding the old shared data.

The information processing apparatus pertaining to a third aspect of the present invention further comprises a shared data management unit configured to manage information indicating the location of the encrypted shared data in the second data storage in association with the first decryption key, wherein the control unit controls the second system to specify the location of the encrypted shared data within the second data storage based on the information associated with the first decryption key, and overwrites the second updated data into the location.

Thus, the information processing apparatus manages the information indicating the location of the shared data in the second data storage, in association with the first decryption key. The first decryption key is the information that is searched for every time the shared data is updated. In this information processing apparatus, the location of the encrypted shared data, namely the location of the shared data to be updated, is associated with the first decryption key, and thus the operations for searching for the location of the shared data can be simplified.

The information processing apparatus pertaining to a fourth aspect of the present invention further comprises a shared data management unit configured to manage the location of the encrypted shared data in the second data storage, in association with the summary value of the shared data, wherein the control unit controls the second system to decrypt the encrypted shared data stored in the first data storage by using the first decryption key, to calculate a summary value of the shared data obtained by the decryption, to refer to information managed by the shared data management unit, by using the summary value, thereby specifying the encrypted shared data in the second data storage, and to overwrite the location with the second update data.

The information processing apparatus manages the information indicating the location in the second data storage in association with the summary value of the shared data. The summary value of the shared data is small in size. Thus, the information processing apparatus realizes the management with only small pieces of data. Also, due to the management in association with the summary value of the shared data, the correct summary value can not be obtained when the shared data has been tampered with, and in such a case, it is impossible to specify the location of the shared data. This protects the data against unauthorized reading out.

The information processing apparatus pertaining to a fifth aspect of the present invention further comprises a shared data management unit configured to manage the location of the encrypted shared data in the second data storage, in association with the summary value of the shared data stored in the first data storage unit, wherein the control unit controls the second system to calculate a summary value of the encrypted shared data stored in the first data storage, to refer to information managed by the shared data management unit, by using the summary value, thereby specifying the location of the encrypted shared data in the second data storage, and to overwrite the location with the second update data.

The information processing apparatus manages the information indicating the location in the second data storage in association with the summary value of the shared data. The summary value of the encrypted shared data is small in size. Thus, the information processing apparatus realizes the management with only small pieces of data. Also, due to the management in association with the summary value of the encrypted shared data, the correct summary value can not be obtained when the encrypted shared data has been tampered with, and in such a case, it is impossible to specify the location of the encrypted shared data. This protects the data against unauthorized reading out.

The information processing apparatus pertaining to a sixth aspect of the present invention further comprises a second key storage configured to store the first encryption key as a key for the second system that has been encrypted by using the second encryption, wherein the control unit further controls the second system, when receiving an instruction to update the encrypted shared data stored in the second data storage, to encrypt the updated shared data by using the second encryption key, to write the encrypted updated shared data into the second data storage, and to generate the first encryption key by decrypting the encrypted first encryption key by using the second decryption key corresponding to the second encryption key, and controls the first system to encrypt the updated shared data by using the first encryption key generated within the second system, and to write the encrypted updated shared data into the first data storage, thereby updating the encrypted shared data.

Thus the information processing unit realizes the synchronization of the shared data within the second system.

In the information processing apparatus pertaining to a seventh aspect of the present invention, the control unit, when receiving an instruction to update the encrypted shared data stored in the first data storage, to control the first system to decrypt the encrypted shared data stored in the first data storage by using the first decryption key, and to replace the updated shared data with the decrypted shared data.

Thus the information processing apparatus performs the updating after decrypting the shared data. With the stated structure, for example accumulative shared data that changes according to accumulation, such as information that shows the number of times the content is used can be placed under the management.

In the information processing apparatus pertaining to a eighth aspect of the present invention, the control unit, after the encrypted shared data stored in the first data storage has been updated, when receiving an instruction to synchronize the shared data between the first system and the second system, controls the second system to encrypt the updated shared data by using the second encryption key generated within the first system, to write the encrypted updated shared data into the second data storage, and to update the encrypted shared data.

Thus, the information processing apparatus updates the shared data in the second system when instructed to synchronize the shared data between the first system and the second system after the encrypted shared data stored in the first data storage has been updated. Thus, the information processing apparatus updates the shared data within the second system only when the second system requires the updated shared data. This reduces the number of times the updating operations are performed.

The information processing apparatus pertaining to a ninth aspect of the present invention further comprises a hierarchy management unit configured to manage keys for the first system, including the first decryption key, in a hierarchy structure, wherein below each key in the hierarchy structure, an encrypted key is assigned such that the encrypted key can be decrypted by using the corresponding key in the hierarchy structure, and the hierarchy management unit manages the second encryption key that has been encrypted by assigning the second key that has been encrypted below the first decryption key.

Thus the first system can use the key database managed in a hierarchy structure such as a tree structure.

The information processing apparatus pertaining to a tenth aspect of the present invention further comprises an operation unit configured to operate software that uses data managed by the first system, wherein the control unit receives, from the software, an instruction to update the encrypted shared data stored in the data storage.

Thus, it is possible to use the first system from an application.

The information processing apparatus pertaining to an eleventh aspect of the present invention further comprises a holding unit configured to hold a key decrypted by the first system in association with information indicating that the key is for the use in the first system, and a key decrypted by the second system in association with information indicating that the key is for the use in the second system, wherein the first system performs decryption by using the key associated with the information indicating that the key is for the use in the first system, the second system performs encryption by using the key associated with the information indicating that the key is for the use in the second system, and the control unit, after the decryption by the first system, causes the second system to encrypt the updated shared data by using the second encryption key, by rewriting the information of the second encryption key, which is held by the holding unit in association with the information indicating that the key is for the use in the first system, with the information indicating that the key is for the use in the second system.

With the stated structure, the control unit, after the decryption by the first system, causes the second system to encrypt the updated shared data by using the second encryption key, by rewriting the information of the second encryption key, which is held by the holding unit in association with the information indicating that the key is for the use in the first system, with the information indicating that the key is for the use in the second system. This reduces the area size required for storing the key used for the cryptographic processing. Also, since the information processing apparatus keeps holding the key used for the cryptographic processing as plaintext data. This reduces the number of times the key decryption is performed.

In the information processing apparatus pertaining to a twelfth aspect of the present invention, the holding unit is composed of a plurality of blocks each having a predetermined capacity, and holds information indicating, in association with each key held therein, the block that stores the corresponding key.

With this structure, it is possible to efficiently manage the areas for storing the keys in units of blocks.

The information processing apparatus pertaining to a thirteenth aspect of the present invention further comprises a holding unit configured to hold therein a key for the second system, wherein the second system performs encryption by using the key held by the holding unit, and the second system, and the control unit causes the second system to encrypt the updated shared data by causing the holding unit to hold the second encryption key, and when causing the holding unit to hold the second encryption key, when the holding unit lacks an enough empty space, the control unit save a key that has been stored in the storage unit to create an empty area, overwrites the second encryption key into the empty area from which the key has been saved, and after the completion of the generation of the second updated data by the second system, decrypts the saved key and overwrites the second encryption key with the key obtained by the decryption.

With the stated structure, when causing the holding unit to hold the second encryption key and the holding unit lacks an enough empty space, the control unit encrypts and saves a key that has been stored in the holding unit to the outside of the holding unit to create an empty area, overwrites the second encryption key into the empty area from which the key has been saved, and after the completion of the generation of the second updated data by the second system, decrypts the saved key and overwrites the second encryption key with the key obtained by the decryption. Thus, even when the holding unit does not have an enough empty space, it is possible to update the shared data. Also, since the key to be saved from the holding unit is encrypted, it is possible to protect the key against attacks such as theft committed outside the holding unit.

The information processing method pertaining to a fourteenth aspect of the present invention is an information processing method used in an information processing apparatus in which a first system and a second system operate, the first system and the second system being independent systems each encrypting and managing data, the information processing apparatus comprising: a first data storage configured to store therein shared data that has been encrypted by using a first encryption key that is for use in the first system, the shared data being shared between the first system and the second system; a second data storage configured to store therein the shared data that has been encrypted by using a second encryption key that is for use in the second system; and a first key storage configured to store, as a key for the first system, the second encryption key that has been encrypted by using the first encryption key, wherein the information processing method, when instructed to update the encrypted shared data stored in the first data storage, controls the first system to encrypt the shared data that has been updated, by using the first encryption key, and writes the encrypted shared data into the first data storage, and generate the second encryption key by decrypting the second encryption key that has been encrypted, by using a first decryption key that corresponds to the first encryption key, and controls the second system to update the encrypted shared data by encrypting the updated shared data by using the second encryption key generated in the first system and writing the encrypted updated shared data into the second data storage.

The information processing program pertaining to a fifteenth aspect of the present invention is an information processing program used in an information processing apparatus in which a first system and a second system operate, the first system and the second system being independent systems each encrypting and managing data, the information processing apparatus comprising: a first data storage configured to store therein shared data that has been encrypted by using a first encryption key that is for use in the first system, the shared data being shared between the first system and the second system; a second data storage configured to store therein the shared data that has been encrypted by using a second encryption key that is for use in the second system; and a first key storage configured to store, as a key for the first system, the second encryption key that has been encrypted by using the first encryption key, wherein the information processing program, when instructed to update the encrypted shared data stored in the first data storage, controls the first system to encrypt the shared data that has been updated, by using the first encryption key, and writes the encrypted shared data into the first data storage, and generate the second encryption key by decrypting the second encryption key that has been encrypted, by using a first decryption key that corresponds to the first encryption key, and controls the second system to update the encrypted shared data by encrypting the updated shared data by using the second encryption key generated in the first system and writing the encrypted updated shared data into the second data storage.

The information processing program pertaining to a sixteenth aspect of the present invention is recorded on a computer-readable recording medium.

The information processing integrated circuit pertaining to a seventeenth aspect of the present invention is an integrated circuit used in an information processing apparatus in which a first system and a second system operate, the first system and the second system being independent systems each encrypting and managing data, the information processing apparatus comprising: a first data storage configured to store therein shared data that has been encrypted by using a first encryption key that is for use in the first system, the shared data being shared between the first system and the second system; a second data storage configured to store therein the shared data that has been encrypted by using a second encryption key that is for use in the second system; and a first key storage configured to store, as a key for the first system, the second encryption key that has been encrypted by using the first encryption key, wherein the integrated circuit, when instructed to update the encrypted shared data stored in the first data storage, controls the first system to encrypt the shared data that has been updated, by using the first encryption key, and writes the encrypted shared data into the first data storage, and generate the second encryption key by decrypting the second encryption key that has been encrypted, by using a first decryption key that corresponds to the first encryption key, and controls the second system to update the encrypted shared data by encrypting the updated shared data by using the second encryption key generated in the first system and writing the encrypted updated shared data into the second data storage.

An information processing apparatus pertaining as one aspect of the present invention is an information processing apparatus in which a first system and a second system operate, the first system and the second system being independent systems each encrypting and managing data, the information processing apparatus comprising: a first data storage configured to store therein shared data that has been encrypted by using a first encryption key that is for use in the first system, the shared data being shared between the first system and the second system; a second data storage configured to store therein the shared data that has been encrypted by using a second encryption key that is for use in the second system; a first key storage configured to store, as a key for the first system, the second encryption key that has been encrypted by using the first encryption key; and a control unit configured to control the first system and the second system, wherein the control unit, when instructed to update the encrypted shared data stored in the first data storage, controls the first system to encrypt the shared data that has been updated, by using the first encryption key, and writes the encrypted shared data into the first data storage, and generate the second encryption key by decrypting the second encryption key that has been encrypted, by using a first decryption key that corresponds to the first encryption key, and encrypts the updated shared data by using the second encryption key generated in the first system and writes the encrypted updated shared data into the second data storage.

With the stated structure, the information processing apparatus pertaining to the present invention controls the first system to encrypt the shared data that has been updated, by using the first encryption key, and writes the encrypted shared data into the first data storage, and generate the second encryption key by decrypting the second encryption key that has been encrypted, by using a first decryption key that corresponds to the first encryption key, and encrypts the shared data that has been updated, by using the second encryption key generated within the first system, and writes the encrypted updated shared data into the second data storage. Thus, the information processing apparatus decrypts the second encryption key held in the second system, directly from the first system. This saves the steps for acquiring the second encryption key in the second system, and expedites the synchronization of the updated data.

(17) The components of each embodiment described above may be composed of a single system LSI (Large Scale Integration). A system LSI is an ultra-multifunctional LSI produced by integrating multiple components on one chip and, more specifically, is a computer system including a microprocessor, ROM, RAM, and the like. Computer programs are stored in the RAM. The microprocessor operates according to the computer programs, and thereby the system LSI accomplishes its functions.

Individual components comprising each of the above-described devices may respectively be made into discrete chips, or part or all of the components may be made into one chip. This structure achieves a higher processing speed than when the components are realized as software.

(18) The system LSI may be referred to as IC, LSI, super LSI, or ultra LSI, depending on the degree of integration. The system LSI is within the scopes of the present invention, no matter which integration degree is adopted. It is possible to use a FPGA (Field Programmable Gate Array) that is programmable even after it has been manufactured, or a reconfigurable processor in which the connection and settings of circuit cells in the LSI can be restructured.

Furthermore, if technology for forming integrated circuits that replaces LSIs emerges, owing to advances in semiconductor technology or to another derivative technology, the integration of the components may naturally be accomplished using such technology. The application of biotechnology or the like is possible.

(19) Part or all of the components comprising each of the above devices may be assembled as an IC card detachable from each device, or as a single module. The IC card/module is a computer system that includes a microprocessor, ROM, RAM, etc. The IC card/module may include therein the above-mentioned ultra-multifunctional LSI. The microprocessor operates according to computer programs, and the IC card/module thereby accomplishes its functions. The IC card/module may be tamper resistant.

(20) The present invention may also be a computer-readable recording medium, such as a flexible disk, hard disk, CD-ROM, MO, DVD, DVD-ROM, DVD-RAM, BD (Blu-ray Disc), or semiconductor memory, on which the above-mentioned computer program or digital signal is recorded. The present invention may also be the digital signal recorded on such a recording medium.

The present invention may also be the computer programs or digital signal to be transmitted via networks, of which telecommunications networks, wire/wireless communications networks, and the Internet are representative, or via data broadcasting.

The present invention may also be a computer system comprising a microprocessor and memory, the memory storing the computer programs, and the microprocessor operating in accordance with the computer programs.

Also, another independent computer system may implement the computer programs or digital signal after the computer programs or digital signal are transferred via being recorded on the recording medium, via one of the above-mentioned networks, etc.

(21) The above Embodiments and Modifications may be combined with one another.

### [Industrial Applicability]

The technique pertaining to the present invention aims to expedite procedures for using keys carried out in key management software for managing data pieces protected with keys of a plurality of key databases each having a tree structure. For this purpose, in data synchronization using two key databases with respect to same data pieces, a key for one key database which has been determined in advance is used for updating the data piece managed under the other key database. Thus, this technique achieves an advantageous effect that the number of key decryption operations is reduced. Therefore, this technique is particularly effective in the filed of apparatuses that perform high-speed data synchronization.

### [Reference Signs List]

10: information processing apparatus
111: CPU
112: first storage unit
113: second storage unit
1 14: cryptographic processing unit
115: bus
116: key management software
117: application program A
118: application program B
119: data access unit
120: key database A
121: key database B
122: encrypted-data storage
123: non-volatile memory
124: cryptographic engine
125: key storage for key database B
126: key storage for key database A
201: database determination unit
202: plaintext data extraction unit
203: hash value generation unit
204: hash value determination unit
205: handler value determination unit
206: key acquisition unit
207: management table storage unit
208: management table update unit

## Claims

1. An information processing apparatus that is provided with a plurality of cryptographic systems each encrypting and storing data, comprising:
a data acquisition unit configured to acquire target data that is to be encrypted in one of the cryptographic systems;
a determination unit configured to determine whether the target data has been encrypted and stored in another one of the cryptographic systems;
a key acquisition unit configured to acquire a key used in the encryption of the target data, when the determination unit judges that the target data has been encrypted and stored in the other one of the cryptographic systems;
a key storage unit configured to be used in the one of the cryptographic systems; and
a key writing unit configured to write the key acquired by the key acquisition unit into the key storage unit, in association with the target data.

2. An information processing apparatus that is provided with a first cryptographic system and a second cryptographic system each encrypting and storing data, comprising:
a data acquisition unit configured to acquire target data that is to be encrypted in the first cryptographic system;
a determination unit configured to determine whether encrypted data that has been generated by encryption of the target data is stored in the second cryptographic system;
a key acquisition unit configured to acquire a second key that has been used in the encryption of the target data performed in the second cryptographic system, when the determination unit judges that the encrypted data is stored in the second cryptographic system;
a first key storage unit configured to be used in the first cryptographic system;
a cryptographic processing unit configured to encrypt the second key by using a first key that is to be used in encryption of the target data; and
a key writing unit configured to write the encrypted second key into the first key storage unit, in association with the target data.

3. The information processing apparatus of Claim 2 further comprising:
a second-data storage unit configured to store, as second data, the encrypted data that has been generated by the encryption of the target data performed in the second cryptographic system by using the second key, wherein
the determination unit determines whether the second data is stored in the second-data storage unit.

4. The information processing apparatus of Claim 3, wherein
the cryptographic processing unit is further configured to encrypt the target data within the first cryptographic system by using the first key, thereby generating first data, and
the information processing apparatus further comprises:
a first-data storage unit configured to be used in the first cryptographic system; and
a data writing unit configured to write the first data into the first-data storage unit.

5. The information processing apparatus of Claim 4 further comprising:
a table storage unit configured to store a management table that contains location information that is associated with the target data and indicates a location within the second cryptographic system where the second data is stored, wherein
the determination unit determines whether the management table stored in the table storage unit contains the location information associated with the target data, thereby determining whether the second data is stored in the second-data storage unit.

6. The information processing apparatus of Claim 5, wherein
the data acquisition unit is further configured to acquire an instruction to update the target data,
the determination unit determines, in response to the instruction, whether the second data, which has been generated by encrypting the target data that relates to the instruction, is stored in the second-data storage unit,
the key acquisition unit is further configured to acquire the encrypted second key from the first key storage unit when the determination unit determines that the second data is stored in the second-data storage unit,
the cryptographic processing unit is further configured to decrypt the encrypted second key acquired by the acquisition unit, and encrypts, by using the second key, the target data that has been updated, thereby generating updated second data, and
the data writing unit is further configured to overwrite the second data stored in the second-data storage unit with the updated second data.

7. The information processing apparatus of Claim 6, wherein
the cryptographic processing unit decrypts the encrypted second key by using a decryption key that corresponds to the first key.

8. The information processing apparatus of Claim 7, wherein
the management table further contains key location information that is associated with the target data and indicates a location where the decryption key is stored, and
the cryptographic processing unit uses the decryption key acquired from the location indicated by the key location information.

9. The information processing apparatus of Claim 6, wherein
the cryptographic processing unit is further configured to encrypt, by using the first key, the target data that has been updated, thereby generating updated first data, and
the data writing unit overwrites the first data stored in the first-data storage unit with the updated first data.

10. The information processing apparatus of Claim 9, wherein
the data writing unit overwrites the second data stored in the second-data storage unit with the updated second data, when receiving a synchronization instruction after overwriting the first data stored in the first-data storage unit with the updated first data.

11. The information processing apparatus of Claim 9, wherein
the location information contained in the management table indicates a location within the second-data storage unit where the second data is stored, and
the data writing unit writes the updated second data into the location indicated by the location information.

12. The information processing apparatus of Claim 6, wherein
the cryptographic processing unit is further configured to decrypt the first data stored in the first-data storage unit, thereby generating the target data, and to encrypt updated data generated based on the target data.

13. The information processing apparatus of Claim 5, wherein
the management table contains the location information and a digest value of the target data in association with each other, and
the determination unit calculates a digest value based on the target data, and determines whether the management table contains the location information that corresponds to the calculated digest value.

14. The information processing apparatus of Claim 5, wherein
the management table contains the location information and a digest value of the first data in association with each other, and
the determination unit calculates a digest value based on the first data stored in the first-data storage unit, and determines whether the management table contains the location information that corresponds to the calculated digest value.

15. The information processing apparatus of Claim 2 further comprising:
a second key storage unit configured to be used in the second cryptographic system, wherein
the data acquisition unit is further configured to acquire the target data that is to be encrypted within the second cryptographic system,
the determination unit is further configured to determine whether encrypted data that has been generated by encryption of the target data is stored in the first cryptographic system,
the key acquisition unit is further configured to acquire the first key that has been used in the encryption of the target data performed in the first cryptographic system, when the determination unit judges that the encrypted data that has been generated by the encryption of the target data is stored in the first cryptographic system,
the cryptographic processing unit is further configured to encrypt the first key by using the second key that is to be used in encryption of the target data, the encryption to be performed in the second cryptographic system, and
the key writing unit is further configured to write, within the second cryptographic system, the encrypted first key into the second key storage unit, in association with the target data.

16. The information processing apparatus of Claim 15, wherein
the cryptographic processing unit is further configured to encrypt the target data within the second cryptographic system by using the second key, thereby generating second data, and
the information processing apparatus further comprises:
a second-data storage unit configured to be used in the second cryptographic system, and
a data writing unit configured to write the second data into the second storage unit.

17. The information processing apparatus of Claim 16, wherein
the data acquisition unit is further configured to acquire an instruction to update the target data,
the determination unit determines, in response to the instruction, whether the first data, which has been generated by encrypting the target data that relates to the instruction, is stored in the first-data storage unit,
the key acquisition unit is further configured to acquire the encrypted first key from the second key storage unit when the determination unit determines that the first data is stored in the first-data storage unit,
the cryptographic processing unit is further configured to decrypt the encrypted first key acquired by the acquisition unit, and to encrypt updated target data that has been generated by updating the target data, by using the first key, thereby generating updated first data, and
the data writing unit is further configured to overwrite the first data stored in the first-data storage unit with the updated first data.

18. The information processing apparatus of Claim 2, wherein
the first key storage unit manages keys in the first cryptographic system in a hierarchy structure, in which a level immediately below each key is assigned an encrypted key that is decryptable with the corresponding key, and
the key writing unit writes the encrypted second key into a level immediately below the second key.

19. The information processing apparatus of Claim 2 further comprising:
a processor configured to operate according to an application program that uses the encrypted data in the first cryptographic system, wherein
the application program includes an instruction to output the target data to the data acquisition unit, and
the processor outputs the target data to the data acquisition unit.

20. The information processing apparatus of Claim 2 further comprising:
a key storage unit configured to store therein a key decrypted within the first cryptographic system, in association with first type information indicating that the key is for use within the first cryptographic system, and to store a key decrypted within the second cryptographic system, in association with second type information indicating that the key is for use within the second cryptographic system, wherein
within the first cryptographic system, the cryptographic processing unit performs decryption by using the key associated with the first type information,
within the second cryptographic system, the cryptographic processing unit performs decryption by using the key associated with the second type information, and
the information processing apparatus further comprises:
a control unit configured to cause the cryptographic processing unit to encrypt, within the second cryptographic system, updated target data that has been generated by updating the target data, by replacing the first type information which has been associated with the key stored in the key storage unit with the second type information, after the decryption has been performed within the first cryptographic system.

21. The information processing apparatus of Claim 20, wherein
the key storage unit includes a plurality of storage blocks each having a predetermined capacity, and stores therein block information that indicates, for each key stored therein, the corresponding one of the storage blocks in which the key is stored.

22. The information processing apparatus of Claim 2, wherein
the cryptographic processing unit includes:
a control unit;
a key storage unit configured to store therein the first key for use in the first cryptographic system; and
a cryptographic engine unit configured to perform encryption by using the first key stored in the cryptographic processing unit, wherein
when the key storage unit lacks enough empty space for storing the first key, the control unit causes the cryptographic engine unit to encrypt and externally save a key that has been stored in the storage unit to create an empty area, writes the first key into the empty area, and after encryption with use of the first key has been completed within the first cryptographic system, causes the cryptographic processing unit to decrypt the saved key that has been encrypted and to overwrite the first key with the saved key.

23. A method used in an information processing apparatus that is provided with a first cryptographic system and a second cryptographic system each encrypting and storing data, the method comprising:
a data acquisition step of acquiring target data that is to be encrypted in the first cryptographic system;
a determination step of determining whether encrypted data that has been generated by encryption of the target data is stored in the second cryptographic system;
a key acquisition step of acquiring a second key that has been used in the encryption of the target data performed in the second cryptographic system, when judged in the determination step that the encrypted data is stored in the second cryptographic system;
a cryptographic processing step of encrypting the second key by using a first key that is to be used in encryption of the target data; and
a key writing step of writing the encrypted second key into a first key storage unit, in association with the target data.

24. A computer program used in an information processing apparatus that is provided with a first cryptographic system and a second cryptographic system each encrypting and storing data, the method causing the information processing apparatus as a computer to perform:
a data acquisition step of acquiring target data that is to be encrypted in the first cryptographic system;
a determination step of determining whether encrypted data that has been generated by encryption of the target data is stored in the second cryptographic system;
a key acquisition step of acquiring a second key that has been used in the encryption of the target data performed in the second cryptographic system, when judged in the determination step that the encrypted data is stored in the second cryptographic system;
a cryptographic processing step of encrypting the second key by using a first key that is to be used in encryption of the target data; and
a key writing step of writing the encrypted second key into a first key storage unit, in association with the target data.

25. The computer program of Claim 24 that is recorded on a non-transitory computer-readable recording medium.

26. An integrated circuit that is provided with a first cryptographic system and a second cryptographic system each encrypting and storing data, comprising:
a data acquisition unit configured to acquire target data that is to be encrypted in the first cryptographic system;
a determination unit configured to determine whether encrypted data that has been generated by encryption of the target data is stored in the second cryptographic system;
a key acquisition unit configured to acquire a second key that has been used in the encryption of the target data performed in the second cryptographic system, when the determination unit judges that the encrypted data is stored in the second cryptographic system;
a first key storage unit configured to be used in the first cryptographic system;
a cryptographic processing unit configured to encrypt the second key by using a first key that is to be used in encryption of the target data; and
a key writing unit configured to write the encrypted second key into the first key storage unit, in association with the target data.
